(19) Europäisches Patentamt
European Patent Office
Office européen des brevets

(11) EP 4 410 858 A1

(12) EUROPEAN PATENT APPLICATION
published in accordance with Art. 153(4) EPC

(43) Date of publication:
**07.08.2024 Bulletin 2024/32**

(21) Application number: **22873024.8**

(22) Date of filing: **26.09.2022**

(51) International Patent Classification (IPC):
***C08G 59/40*** *(2006.01)* ***C08G 59/06*** *(2006.01)*
***C08G 59/14*** *(2006.01)* ***C08G 59/62*** *(2006.01)*
***C09D 5/44*** *(2006.01)* ***C09D 163/00*** *(2006.01)*

(52) Cooperative Patent Classification (CPC):
**C08G 59/06; C08G 59/14; C08G 59/40; C08G 59/62; C09D 5/44; C09D 163/00;** Y02P 20/10

(86) International application number:
**PCT/JP2022/035613**

(87) International publication number:
**WO 2023/048273 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.09.2021 JP 2021156976**
**29.09.2021 JP 2021159276**
**22.09.2022 JP 2022151289**

(71) Applicant: **Kansai Paint Co., Ltd.**
**Amagasaki-shi, Hyogo 661-8555 (JP)**

(72) Inventors:
- **YAMADA, Noriyuki**
  **Hiratsuka-shi, Kanagawa 254-8562 (JP)**
- **TSUSHIMA, Shinji**
  **Hiratsuka-shi, Kanagawa 254-8562 (JP)**
- **IWAI, Takashi**
  **Hiratsuka-shi, Kanagawa 254-8562 (JP)**

(74) Representative: **Grünecker Patent- und Rechtsanwälte PartG mbB**
**Leopoldstraße 4**
**80802 München (DE)**

# (54) MODIFIED EPOXY RESIN AND ELECTRODEPOSITION COATING MATERIAL

(57) The present invention provides an epoxy resin that has excellent curability, when a lowactivity catalyst is used or when used at low temperatures, that has excellent storage stability, and that yields a coating material having excellent coating film finish properties and corrosion resistance. The present invention further addresses an object of providing an amine-modified epoxy resin produced by reacting the epoxy resin with an amine compound, as well as providing a cationic electrodeposition coating material containing the amine-modified epoxy resin. The solution provided is a modified epoxy resin produced by reaction of at least the following (i) and (ii) and having an average polyfunctionalization degree (X1) per molecule of the modified epoxy resin of 0.10 or greater: (i) a compound ($\alpha$) having one or more epoxy groups, (ii) a compound ($\beta$) having a functional group that is reactive with an epoxy group and that has a total functionality of the functional group of 3 or greater, and/or a compound ($\gamma$)having a functional group that is reactive with an epoxy group and that has a total functionality of the functional group of 1 or 2, and the average polyfunctionalization degree (X1) per molecule of the modified epoxy resin being represented by Equation (1) below: Equation (1): Average Polyfunctionalization Degree (X1) = Number of Terminals Per Molecule of Modified Epoxy Resin - 2

EP 4 410 858 A1

## Description

### Technical Field

The present invention relates to a modified epoxy resin and an electrodeposition coating material. More specifically, the present invention relates to (i) a modified epoxy resin produced by reaction of specific components, (ii) a modified epoxy resin having specific properties, (iii) an aqueous resin dispersion in which the modified epoxy resin is dispersed in an aqueous medium, (iv) a cationic electrodeposition coating material containing the modified epoxy resin or a modified product of the modified epoxy resin, and (v) an amine-modified epoxy resin produced by reaction of the modified epoxy resin with an amine compound.

### Background Art

Epoxy resins are excellent in mechanical strength, adhesion, chemical resistance, and other properties, and are widely used as coating film-forming resins in coating materials.

Among coating materials, electrodeposition coating materials are excellent in coating workability and form coating films having good corrosion resistance. As such, electrodeposition coating materials are widely used in the coating of metal products (such as automobile parts, electric equipment parts, and other industrial equipment) which are required to have this performance.

An electrodeposition coating material is provided in a form in which a coating film-forming resin which is a cationic resin (such as an amine-modified epoxy resin) or an anionic resin (such as a carboxyl group-containing resin), a curing agent (such as a blocked polyisocyanate compound), and a curing catalyst are dissolved or dispersed in an aqueous medium. When this coating composition is used in a coating bath, upon application of a voltage to an object to be coated serving as the cathode or the anode, the coating composition forms a precipitated coating film on the object to be coated. Then, the precipitated coating film is heated to form a crosslinked and cured coating film.

In an electrodeposition coating material, an organotin compound is usually used as a curing catalyst to promote crosslinking reaction. However, although organotin compounds have very high catalytic performance, their use may be regulated due to safety and environmental issues. Therefore, there has been a need for catalysts that replace organotin compounds. The use of bismuth compounds, zinc compounds, or the like as substitutes for organotin compounds has been studied, but such use has problems such as high cost, insufficient catalytic effect, and instability in a coating material.

Further, even when an organotin compound catalyst is used, it is necessary to increase the curing performance as much as possible.

Usually, coating film formation by crosslinking and curing is carried out by heating at 160°C or higher. However, depending on the conditions of the drying oven and the shape of the object to be coated, some portions may be baked at a temperature lower than the target temperature. In addition, in order to reduce energy costs, there has been a demand for low-temperature baking (from 80 to 160°C, preferably from 80 to 130°C).

In order to perform baking at a low temperature, a low-temperature-curable blocked polyisocyanate compound is generally used as a curing agent. However, in the case of an electrodeposition coating material having increased reactivity at low temperatures, the long-term storage stability (bath stability) is insufficient, and as a result, the finish properties and corrosion resistance of the coating film may be poor.

Further, to increase the corrosion resistance of an object to be coated having a complicated shape, the throwing power of the electrodeposition coating material needs to be increased.

Patent Document 1 describes polyfunctionalized epoxy resins. However, these epoxy resins cannot be used in electrodeposition coating materials. In addition, Patent Document 1 does not include any discussions regarding curability, particularly when a low-activity catalyst is used, and storage stability of the coating material.

Patent Documents 2 and 3 describe electrodeposition coating materials including an amine-modified epoxy resin produced by amine modification of an epoxy resin modified with a caprolactone adduct or a phenolic compound. However, regarding these electrodeposition coating materials, curing properties, particularly low-temperature curability, and storage stability of the coating material are also not discussed.

### Citation List

#### Patent Document

Patent Document 1: CN 104628995 A
Patent Document 2: JP 2016-135848 A

Patent Document 3: JP 2001-279168 A

## Summary of Invention

### Technical Problem

A problem that the present invention aims to solve is to provide a modified epoxy resin that has excellent curability, when a low-activity catalyst is used or when used at low temperatures, that has excellent storage stability, and that yields a coating material having excellent coating film finish properties and corrosion resistance (throwing power). The present invention also aims to provide an aqueous resin dispersion containing the modified epoxy resin or a modified product thereof dispersed in an aqueous medium, an electrodeposition coating material containing the modified epoxy resin or a modified product thereof, an amine-modified epoxy resin produced by reaction of the modified epoxy resin with an amine compound, and a cationic electrodeposition coating material containing the amine-modified epoxy resin.

### Solution to Problem

As a result of intensive studies to solve the above problems, the inventors of the present invention found that the above-mentioned problems can be solved by a modified epoxy resin produced by reaction of specific components, a modified epoxy resin having specific properties, an aqueous resin dispersion in which one of the above-mentioned modified epoxy resins or a modified product thereof is dispersed in an aqueous medium, an electrodeposition coating material containing the above-mentioned one of the above-mentioned modified epoxy resins or a modified product thereof, an amine-modified epoxy resin produced by reaction of one of the above-mentioned modified epoxy resins with an amine compound, and a cationic electrodeposition coating material containing the amine-modified epoxy resin and a bismuth compound, and thereby completed the present invention.
The present invention is specifically described as follows.

[Aspect 1] A modified epoxy resin produced by reaction of at least the following (i) and (ii) and having an average polyfunctionalization degree (X1) per molecule of the modified epoxy resin of 0.10 or greater,

(i) a compound ($\alpha$) having one or more epoxy groups,
(ii) a compound ($\beta$) having a functional group that is reactive with an epoxy group and that has a total functionality of the functional group of 3 or greater, and/or a compound ($\gamma$) having a functional group that is reactive with an epoxy group and that has a total functionality of the functional group of 1 or 2, and

the average polyfunctionalization degree (X1) per molecule of the modified epoxy resin being represented by Equation (1) below.

Average Polyfunctionalization Degree (X1) = Number of Terminals Per Molecule of Modified Epoxy Resin - 2     Equation (1):

[Aspect 2] The modified epoxy resin according to Aspect 1, wherein the compound ($\beta$) is a polyfunctionalizing agent containing a compound (A) having "a" primary amino groups, "b" secondary amino groups, "c" alcoholic hydroxyl groups, "d" phenolic hydroxyl groups, "e" carboxyl groups, "f" mercapto groups, "g" sulfonate groups, "h" carboxylic anhydride groups, "i" epoxy groups, and "u" isocyanate groups, where a, b, c, d, e, f, g, h and u are each independently an integer of 0 or greater, i is an integer of 0 or 3 or greater, $2a + b + c + d + e + f + g + 2h + i + u \geq 3$, and, when $d \geq 3$, $2a + b + c + e + f + g + 2h + i + u \geq 1$.
[Aspect 3] A modified epoxy resin produced by reaction of at least the following (i) and (ii),

(i) a compound ($\alpha$) having one or more epoxy groups,
(ii) a compound ($\beta$) having a functional group that is reactive with an epoxy group and that has a total functionality of the functional group of 3 or greater, wherein

the compound ($\beta$) is a polyfunctionalizing agent containing a compound (A) having "a" primary amino groups, "b" secondary amino groups, "c" alcoholic hydroxyl groups, "e" carboxyl groups, "f" mercapto groups, "g" sulfonate groups, "h" carboxylic anhydride groups, "i" epoxy groups, and "u" isocyanate groups, where a, b, c, e, f, g, h and u are each independently an integer of 0 or greater, i is an integer of 0 or 3 or greater, 2a + b + c + e + f + g + 2h +

i + u ≥ 3, and, when b = 1, a ≠ 1, c ≠ 2, or e + f + g + 2h + i + u ≥ 1.

[Aspect 4] The modified epoxy resin according to Aspect 1, wherein

(ii) above contains a compound (β) having a functional group that is reactive with an epoxy group and that has a total functionality of the functional group of 3 or greater, and

the compound (β) is a polyfunctionalizing agent containing a compound (A) having "a" primary amino groups, "b" secondary amino groups, "c" alcoholic hydroxyl groups, "e" carboxyl groups, "f" mercapto groups, "g" sulfonate groups, "h" carboxylic anhydride groups, "i" epoxy groups, and "u" isocyanate groups, where a, b, c, e, f, g, h and u are each independently an integer of 0 or greater, i is an integer of 0 or 3 or greater, 2a + b + c + e + f + g + 2h + i + u ≥ 3, and, when b = 1, a ≠ 1, c ≠ 2, or e + f + g + 2h + i + u ≥ 1.

[Aspect 5] The modified epoxy resin according to any one of Aspects 1 to 4, wherein the polyfunctionalizing agent contains one or more types selected from the group consisting of an amine compound having two or more amino groups, a carboxylic acid compound having three or more carboxyl groups or an anhydride thereof, an alcohol compound having three or more alcoholic hydroxyl groups, and an epoxy compound having three or more epoxy groups.

[Aspect 6] The modified epoxy resin according to any one of Aspects 1 to 5, wherein

the polyfunctionalizing agent further contains a compound (B) having "j" primary amino groups, "k" secondary amino groups, "m" alcoholic hydroxyl groups, "n" phenolic hydroxyl groups, "p" carboxyl groups, "q" mercapto groups, "r" sulfonate groups, "s" carboxylic anhydride groups, and "t" isocyanate groups, where j, k, m, n, p, q, r, s, and t are each independently an integer of 0 or greater and 2j + k + m + n + p + q + r + 2s + t ≤ 2, and

a content ratio of the compound (A) to the compound (B) is within a range of from 1/99 to 99/1.

[Aspect 7] The modified epoxy resin according to Aspect 3, wherein the modified epoxy resin has an average polyfunctionalization degree (X1) per molecule of the modified epoxy resin of 0.10 or greater, the average polyfunctionalization degree (X1) per molecule of the modified epoxy resin being represented by Equation (1) below.

Average Polyfunctionalization Degree (X1) = Number of Terminals Per Molecule of Modified Epoxy Resin - 2 Equation (1):

[Aspect 8] The modified epoxy resin according to any one of Aspects 1 to 7, wherein the modified epoxy resin has an average polyfunctionalization concentration (Y1) of 0.10 or greater, the average polyfunctionalization concentration (Y1) being represented by Equation (2) below.

Average Polyfunctionalization Concentration (Y1) = Average Polyfunctionalization Degree (X1) of Modified Epoxy Resin ÷ Weight-Average Molecular Weight Mw of Modified Epoxy Resin × 1000 Equation (2):

[Aspect 9] The modified epoxy resin according to any one of Aspects 1, 2, and 4, wherein the compound (γ) contains a compound (γ1) having no amino group.

[Aspect 10] The modified epoxy resin according to any one of Aspects 1, 2, 4, and 9, wherein the compound (γ) is a compound having no amino group.

[Aspect 11] The modified epoxy resin according to any one of Aspects 1, 2, 4, 9, and 10, wherein

at least some of the terminals of the modified epoxy resin are organic groups represented by the following structural formula (1) or the following structural formula (2):

[Chem. 1]

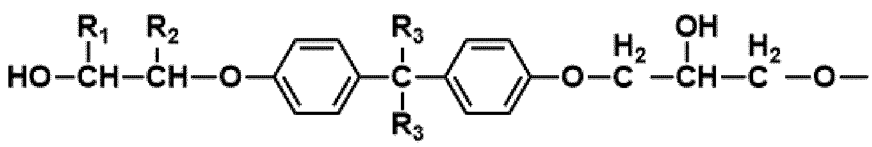

· · · Formula (1)

where, $R_1$ and $R_2$ each independently represent a hydrogen atom, a hydroxymethyl group, an alkyl group having

from 1 to 12 carbons, or an alkyloxymethyl group having from 1 to 13 carbons; and $R_3$ represents a hydrogen atom or a methyl group, and a plurality of $R_3$s may be the same or different,

[Chem. 2]

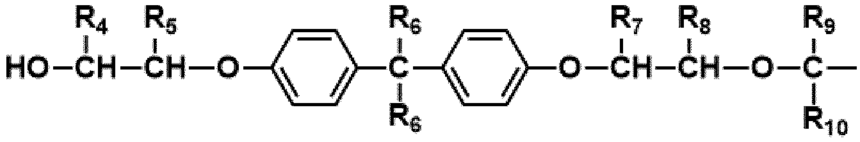

· · · Formula (2)

where, $R_4$ and $R_5$ each independently represent a hydrogen atom, a hydroxymethyl group, an alkyl group having from 1 to 12 carbons, or an alkyloxymethyl group having from 1 to 13 carbons; $R_6$ represents a hydrogen atom or a methyl group, and a plurality of $R_6$s may be the same or different; and $R_7$, $R_8$, $R_9$ and $R_{10}$ each independently represent a hydrogen atom or an alkyl group having from 1 to 12 carbons.

[Aspect 12] An aqueous resin dispersion containing the modified epoxy resin according to any one of Aspects 1 to 11 dispersed in an aqueous medium.

[Aspect 13] An amine-modified epoxy resin produced by reaction of the modified epoxy resin according to any one of Aspects 1 to 11 with an amine compound.

[Aspect 14] A cationic electrodeposition coating material containing the modified epoxy resin according to any one of Aspects 1, 2, 4 and 9 to 11 or a modified product thereof.

[Aspect 15] A cationic electrodeposition coating material containing an epoxy resin and a curing agent, the epoxy resin containing the modified epoxy resin according to any one of Aspects 1, 2, 4 and 9 to 11 and an amine-added epoxy resin.

[Aspect 16] A cationic electrodeposition coating material containing the amine-modified epoxy resin according to Aspect 13.

[Aspect 17] A cationic electrodeposition coating material containing an epoxy resin and a curing agent, the epoxy resin containing the amine-modified epoxy resin according to Aspect 13 and the modified epoxy resin according to claim 1.

[Aspect 18] The cationic electrodeposition coating material according to Aspect 16 or 17, wherein
the amine-modified epoxy resin contained in the cationic electrodeposition coating material has an average polyfunctionalization degree (X2) of 0.10 or greater, the average polyfunctionalization degree (X2) being represented by Equation (3) below.

Average Polyfunctionalization Degree (X2) = Number of Terminals Per Molecule of Modified Epoxy Resin(I) - 2     Equation (3):

[Aspect 19] The cationic electrodeposition coating material according to any one of Aspects 16 to 18, wherein
the amine-modified epoxy resin contained in the cationic electrodeposition coating material has an average polyfunctionalization concentration (Y2) of 0.10 or greater, the average polyfunctionalization concentration (Y2) being represented by Equation (4) below.

Average Polyfunctionalization Concentration (Y2) of Amine-Modified Epoxy Resin Contained in Cationic Electrodeposition Coating Material = Average Polyfunctionalization Degree (X2) of Amine-Modified Epoxy Resin ÷ Weight-Average Molecular Weight Mw of Amine-Modified Epoxy Resin (I) × 100 × (Amount of Amine-Modified Epoxy Resin (I) ÷ Amount of All Amine-Modified Epoxy Resins)     Equation (4):

[Aspect 20] The cationic electrodeposition coating material according to any one of Aspects 13 to 19, wherein
the epoxy resin contained in the cationic electrodeposition coating material has an average polyfunctionalization concentration (Y3) of 0.1 or greater, the average polyfunctionalization concentration (Y3) being represented by Equation (5) below.

Equation (5): Average Polyfunctionalization Concentration (Y3) of Epoxy Resin Contained in Cationic Electrodeposition Coating Material = Average Polyfunctionalization Degree (X1) of Modified Epoxy Resin ÷ Weight-Average Molecular Weight Mw of Modified Epoxy Resin×1000×(Amount of Modified Epoxy Resin ÷ Amount of All Epoxy Resins)

Advantageous Effects of Invention

The present invention provides a modified epoxy resin that has excellent curability, when a low-activity catalyst is used or when used at low temperatures, that has excellent storage stability, and that yields a coating material having excellent coating film finish properties and corrosion resistance (throwing power). The present invention also provides an aqueous resin dispersion containing the modified epoxy resin or a modified product thereof dispersed in an aqueous medium, an electrodeposition coating material containing the modified epoxy resin or a modified product thereof, an amine-modified epoxy resin produced by reaction of the modified epoxy resin with an amine compound, and a cationic electrodeposition coating material containing the amine-modified epoxy resin.

Description of Embodiments

In the present invention, the "modified epoxy resin" refers to a resin produced by reaction of the epoxy group of a resin having an epoxy group and/or an epoxy compound with a compound having a functional group that is reactive with an epoxy group, and may not have an epoxy group.
In the present invention, the "epoxy resin" includes a resin produced by reaction of the epoxy group of a resin having an epoxy group and/or an epoxy compound with a compound having a functional group that is reactive with an epoxy group, and may not have an epoxy group.
In the present invention, the "epoxy" may be abbreviated as "EP".
In the present invention, a numerical range may be interpreted as any combination of the described upper limit values and lower limit values.
In the present invention, "polyfunctional" means that a compound having a functional group has a functionality, or a total functionality, of greater than 2. However, in the present invention, even if there are two or more functional groups generated and/or introduced by the reaction between a terminal epoxy group of an epoxy resin and a reactive functional group-containing compound, this terminal moity is counted as monofunctional. Further, a secondary hydroxyl group in the molecule of the epoxy resin is not included in the functionality because of its low reactivity, among other reasons. In the present invention, the "functional group" in polyfunctionality is substantially a reactive functional group capable of reacting with a curing agent such as a blocked polyisocyanate compound.
In addition, in the present invention, for example, having "one" functional group in a compound may be referred to as "monofunctional", "the number of functional groups being 1", "monovalent", or the like.

[Modified Epoxy Resin]

<Modified Epoxy Resin According to First Aspect>

A modified epoxy resin according to a first aspect of the present invention is a modified epoxy resin produced by reaction of at least the following (i) and (ii) and having an average polyfunctionalization degree (X1) per molecule of the modified epoxy resin of 0.10 or greater,

(i) a compound ($\alpha$) having one or more epoxy groups,
(ii) a compound ($\beta$) having a functional group that is reactive with an epoxy group and that has a total functionality of the functional group of 3 or greater, and/or a compound ($\gamma$) having a functional group that is reactive with an epoxy group and that has a total functionality of the functional group of 1 or 2, and

the average polyfunctionalization degree (X1) per molecule of the modified epoxy resin being represented by Equation (1) below.

Equation (1): Average Polyfunctionalization Degree (X1) = Number of Terminals Per Molecule of Modified Epoxy Resin - 2

The compound (β) that can be suitably used may be a compound that has three or more functional groups that are reactive with an epoxy group and that is capable of polyfunctionalization, and is preferably a polyfunctionalizing agent containing a compound (A) having "a" primary amino groups, "b" secondary amino groups, "c" alcoholic hydroxyl groups, "d" phenolic hydroxyl groups, "e" carboxyl groups, "f" mercapto groups, "g" sulfonate groups, "h" carboxylic anhydride groups, "i" epoxy groups, and "u" isocyanate groups, where a, b, c, d, e, f, g, h and u are each independently an integer of 0 or greater, i is an integer of 0 or 3 or greater, $2a + b + c + d + e + f + g + 2h + i + u \geq 3$, and, when $d \geq 3$, $2a + b + c + e + f + g + 2h + i + u \geq 1$.

The modified epoxy resin according to the present invention includes the following (a) to (c):

(a) a compound produced by reaction of at least the compound (α), the compound (β), and the compound (γ);
(b) a compound produced by reaction of at least the compound (α) and the compound (β);
(c) a compound produced by reaction of at least the compound (α) and the compound (γ).

(Average Polyfunctionalization Degree (X1) of Modified Epoxy Resin)

The average polyfunctionalization degree (X1) per molecule of the epoxy resin can be calculated using Equation (1) below.

Average Polyfunctionalization Degree (X1) = Number of Terminals Per Molecule of Modified Epoxy Resin - 2 (1):

For example, X is 1 when one molecule has three terminals, and X is 0 in the case of a linear modified epoxy resin which is not polyfunctionalized at all. A larger value of the average polyfunctionalization degree (X1) indicates the resin is more polyfunctionalized per molecule.

Note that, polyfunctionalization of the terminal of the modified epoxy resin by reacting the terminal of the modified epoxy resin with a polyfunctional modifier (for example, a carboxylic acid compound such as dimethylolpropionic acid) is not defined as "polyfunctionalization" in the present invention because the reactivity decreases due to steric hindrance. Also, a secondary hydroxyl group in the modified epoxy resin is not defined as "polyfunctionalization" in the present invention from the viewpoint of reactivity.

"Polyfunctionalization" in the present invention means that the main backbone of the modified epoxy resin is branched.

The modified epoxy resin according to the present invention has excellent curability, in particular when a low-activity catalyst is used or when used at low temperatures, and has excellent storage stability. Furthermore, a coating material, particularly an electrodeposition coating material, prepared using the modified epoxy resin has excellent coating film finish properties and corrosion resistance (throwing power).

These properties are closely related to the polyfunctionalization degree of the modified epoxy resin. In particular, the aforementioned properties can be favorably achieved by setting the average polyfunctionalization degree (X1) per molecule of the modified epoxy resin, which is used as the polyfunctionalization degree of the modified epoxy resin, to a specific range. Note that, in the present specification, the "average polyfunctionalization degree (X1) per molecule of the modified epoxy resin" may be referred to as "average polyfunctionalization degree (X1) of the modified epoxy resin" or "average polyfunctionalization degree (X1)".

Methods of producing a polyfunctionalized modified epoxy resin include (1) polyfunctionalization by a polyfunctionalizing agent, which is a method of reacting at least an epoxy compound (having one or more, preferably two or more, epoxy groups) with a polyfunctionalizing agent (compound (β)) having a functional group that is reactive with an epoxy group and that has a total functionality of the functional group of 3 or greater, and (2) polyfunctionalization by a hot process, which is a polyfunctionalization method of reacting a secondary hydroxyl group in the molecule of an epoxy compound with at least one terminal epoxy group of a (different) epoxy compound. Either method can be suitably used. From the viewpoint of stably producing the polyfunctionalized modified epoxy resin, the use of at least the method (1) is preferable.

Note that, the polyfunctionalizing agent here may be a compound that has three or more functional groups that are reactive with an epoxy group and that is capable of polyfunctionalization, and is preferably "a polyfunctionalizing agent containing a compound (A) having "a" primary amino groups, "b" secondary amino groups, "c" alcoholic hydroxyl groups, "d" phenolic hydroxyl groups, "e" carboxyl groups, "f" mercapto groups, "g" sulfonate groups, "h" carboxylic anhydride groups, "i" epoxy groups, and "u" isocyanate groups, where a, b, c, d, e, f, g, h and u are each independently an integer of 0 or greater, i is an integer of 0 or 3 or greater, and $2a + b + c + d + e + f + g + 2h + i + u \geq 3$; when $b = 1$, $a \neq 1$, $c \neq 2$, or $d + e + f + g + 2h + i + u \geq 1$; and, when $d \geq 3$, $2a + b + c + e + f + g + 2h + i + u \geq 1$".

When using the method (1) (polyfunctionalization by a polyfunctionalizing agent) to prepare the polyfunctionalized modified epoxy resin, the average polyfunctionalization degree (N) per molecule of the modified epoxy resin by a polyfunctionalizing agent can be calculated using the following equation.

Average Polyfunctionalization Degree (N) by Polyfunctionalizing Agent = $\Sigma$[(Valence of Each Polyfunctiinalizing Agent - 2) $\times$ Basic Blending Amount of Each Polyfunctionalizing Agent]

Here, the "basic blending amount" of each polyfunctionalizing agent can be determined by the following method.

(Calculation Method of Basic Blending)

Basic Blending Amount (mol) of Each Raw Material = Blending Amount (mol) of Each Raw Material $\times$ Basic Blending Coefficient

※

Blending Amount (mol) of Each Raw Material=Blending Mass (g) of Each Raw Material/Molecular Weight of Each Raw Material

※

Basic Blending Coefficient= 2/(Number (mol) of Epoxy Groups-Number (mol) of Functional Groups That are Reactive with Epoxy Group Excluding End Capping Agent-Number of Polyfunctionalization by Polyfunctionalizing Agent

※ End Capping Agent: Monophenol compounds with only one phenolic hydroxyl group, monocarboxylic acids, monofunctional amines, etc.

※ Functional Groups That are Reactive with Epoxy Group: Phenolic hydroxyl groups, isocyanate groups, carboxyl groups, primary and/or secondary amino groups, etc.

※

Number of Polyfunctionalization by Polyfunctionalizing Agent=(Valence of Polyfunctionalization Agent - 2)$\times$Blending Amount (mol) of Polyfunctionalization Agent

The method (2) (polyfunctionalization by a hot process) is a method of reacting an epoxy group of an epoxy resin with a secondary hydroxyl group of a (different) epoxy resin.

In this case, the average polyfunctionalization degree (M) per molecule of the modified epoxy resin by a hot process can be calculated using the following equation.

$$\text{Average Polyfunctionalization Degree (M) by Hot Process} = (2 - m)/(1 - m) - 2$$

※ m: Excess epoxy in basic blending

Here, excess epoxy in basic blending (excess EP) is calculated as follows.

Excess EP in Basic Blending = Number (mol) of EP Groups in Basic Blending - Number (mol) of Functional Groups That are Reactive with EP Group in Basic Blending

Note that, the excess EP in the modified epoxy resin according to the present invention is, for example, 0 mmol/g or greater, and for example, 5 mmol/g or less, preferably 2 mmol/g or less, and more preferably 1.5 mmol/g or less, based on the resin solid content.

The average polyfunctionalization degree (X1) per molecule of the modified epoxy resin can be calculated from the average polyfunctionalization degree (N) by a polyfunctionalizing agent and the average polyfunctionalization degree (M) by a hot process according to the following equation.

$$\text{Average Polyfunctionalization Degree (X1)} = (N + 2) \times (M + 1) - M - 2$$

The modified epoxy resin according to the first aspect of the present invention may have an average polyfunctionalization degree (X1) per molecule of the modified epoxy resin of usually 0.1 or greater, preferably 0.3 or greater, more preferably 0.6 or greater, even more preferably 0.7 or greater, still more preferably 0.9 or greater, and particularly preferably 1.3 or greater. The upper limit value of the average polyfunctionalization degree (X1) per molecule of the modified epoxy resin is not particularly limited, and may be, for example, 15.0 or less, preferably 13.0 or less, more preferably 10.0 or less, even more preferably 8.0 or less, and particularly preferably 3.7 or less.

When the modified epoxy resin according to the first aspect of the present invention contains a plurality of epoxy resins having different polyfunctionalization degrees, the average polyfunctionalization degree (X1) described below is calculated as the average of the epoxy resins.

(Average Polyfunctionalization Concentration (Y1) of Modified Epoxy Resin)

The modified epoxy resin according to the present invention preferably has an average polyfunctionalization concentration (Y1) represented by the following equation (2) of 0.1 or greater.

Equation (2): Average Polyfunctionalization Concentration (Y1) = Average Polyfunctionalization Degree (X1) of Modified Epoxy Resin ÷ Weight-Average Molecular Weight Mw of Modified Epoxy Resin × 1000

Here, the weight-average molecular weight Mw of the modified epoxy resin is calculated as follows.

Weight-Average Molecular Weight Mw of Modifief Epoxy Resin=∑(Blending Amount (mol) of Each Raw Material in Basic Blending×Molecular Weight of Each Raw Material)

When a plurality of modified epoxy resins having different polyfunctionalization degrees are contained, the average polyfunctionalization degree (X1) used to calculate the average polyfunctionalization concentration (Y1) is an average of the epoxy resins.

The average number of functional groups per molecule of a trifunctional or higher functional polyfunctionalizing agent component contained in the polyfunctionalizing agent is calculated using the following equation.

Average Number of Functional Groups = ∑ (Content Ratio of Each Polyfunctionalizing Agent Component ÷ Molecular Weight of Each Polyfunctionalization Agent Component × Number of Functional Groups in Each Polyfunctionalizing Agent Component)/∑ (Content Ratio of Each Polyfunctionalizing Agent Component ÷ Molecular Weight of Each Polyfunctionalizing Agent Component)

Agent Component)

The average number of functional groups per molecule of a trifunctional or higher functional polyfunctionalizing agent component contained in the polyfunctionalizing agent, when the functionality of the functional group that is reactive with an epoxy group is 1, is calculated using the following equation.

Average Number of Functional Groups = ∑ (Content Ratio of Each Polyfunctionalizing Agent Component ÷ Molecular Weight of Each Polyfunctionalizing Agent Component × Number of Functional Groups in Each Polyfunctionalizing Agent Component)/∑ (Content Ratio of Each Polyfunctionalizing Agent Component ÷ Molecular Weight of Each Polyfunctionalizing Agent Component)

The properties of the modified epoxy resin according to the present invention, such as curability, in particular when a low-activity catalyst is used or when the modified epoxy resin is used at low temperatures, and storage stability, as well as coating film finish properties and corrosion resistance (throwing power) of an electrodeposition coating material prepared using the modified epoxy resin, are closely related to the average polyfunctionalization concentration of the modified epoxy resin in addition to the polyfunctionalization degree of the modified epoxy resin. In particular, the aforementioned properties can be favorably achieved by using the average polyfunctionalization degree (X1) per molecule of the modified epoxy resin, and the average polyfunctionalization concentration (Y1) as necessary, as the polyfunctionalization degree of the modified epoxy resin, and by setting their ranges to specific ranges.

In the modified epoxy resin according to the present invention, the average polyfunctionalization concentration (Y1) per 1 g of the solid content of the modified epoxy resin is usually 0.10 mmol/g or greater, preferably 0.10 mmol/g or greater, and more preferably 0.40 mmol/g or greater. The upper limit value of the average polyfunctionalization concentration (Y1) per 1 g of the solid content of the modified epoxy resin is not particularly limited, and is, for example, 5.00 mmol/g or less, preferably 3.00 mmol/g or less, and more preferably 2.00 mmol/g or less.

The average polyfunctionalization concentration (Y1) defines the polyfunctionalization degree per mass. A larger numerical value of Y1 indicates a larger number of functional groups and a higher reactivity of the resin.

When the polyfunctionalization degree and/or the polyfunctionalization concentration is high, gelation or thickening occurs during the synthesis of the resin, resulting in a coating film with poor finish properties. When the polyfunctionalization degree and/or the polyfunctionalization concentration is low, corrosion resistance and oil crawling resistance decrease.

(Compound (α) Having One or More Epoxy Groups)

The compound (α) having one or more epoxy groups used in the synthesis of the modified epoxy resin according to the first aspect of the present invention is one of the constituent components of the modified epoxy resin of the present invention, and is a compound having at least one, preferably two or more, epoxy groups in one molecule. In the present invention, the number of epoxy groups contained in one molecule of the compound (α) having one or more epoxy groups is preferably 2 or more, and the upper limit value is, for example, 8 or less, preferably 6 or less, more preferably 4 or less, and most preferably 2.

The weight-average molecular weight of the compound (α) having one or more epoxy groups is not particularly limited, and is, for example, at least 300 or greater, preferably from 400 to 4000, and more preferably 800 or greater, and for example, 4000 or less, and preferably 2500 or less. In addition, the epoxy equivalent of the compound (α) is not particularly limited, and for example, the compound (α) suitably has an epoxy equivalent of at least 160 or greater, preferably 180 or greater, more preferably 400 or greater, and for example, 2500 or less, and preferably 1500 or less. The compound (α) having one or more epoxy groups may be, for example, one or more selected from the group consisting of an epoxy compound produced by reaction between a polyphenolic compound and an epihalohydrin (epichlorohydrin or the like), an epoxy compound containing a polyalkylene oxide chain in the molecule, and a dimer acid diglycidyl ester.

In the present invention, the use of an epoxy compound produced by reaction between a polyphenolic compound and an epihalohydrin is preferable.

Any known polyphenolic compound can be used as the polyphenolic compound to be reacted with the epihalohydrin without limitation. For example, the polyphenolic compound used may be one or more selected from the group consisting of bis(4-hydroxyphenyl)-2,2-propane [bisphenol A], bis(4-hydroxyphenyl)methane [bisphenol F], bis(4-hydroxycyclohexyl)methane [hydrogenated bisphenol F], 2,2-bis(4-hydroxycyclohexyl)propane [hydrogenated bisphenol A], 4,4'-dihydroxybenzophenone, bis(4-hydroxyphenyl)-1,1-ethane, bis(4-hydroxyphenyl)-1,1-isobutane, bis(4-hydroxy-3-tert-butyl-phenyl)-2,2-propane, bis(2-hydroxynaphthyl)methane, tetra(4-hydroxyphenyl)-1,1,2,2-ethane, 4,4'-dihydroxydiphenyl sulfone, phenol novolac, and cresol novolac.

The compound (α) having one or more epoxy groups used may be an epoxy compound containing a polyalkylene oxide chain in the molecule. Usually, such an epoxy compound can be produced by (a) a method of reacting an epoxy compound having at least one, preferably two or more, epoxy groups with an alkylene oxide or a polyalkylene oxide to introduce a polyalkylene oxide chain, (b) a method of reacting the polyphenolic compound with a polyalkylene oxide having at least one, preferably two or more, epoxy groups to introduce a polyalkylene oxide chain, or the like. An epoxy compound containing a polyalkylene oxide chain may also be used (see, for example, JP 8-337750 A).

The alkylene group in the polyalkylene oxide chain is preferably an alkylene group having from 2 to 8 carbons, more preferably an ethylene group, a propylene group, or a butylene group, and particularly preferably a propylene group.

From the viewpoint of improving stability, finish properties, and corrosion resistance of the electrodeposition coating material formed, suitably, the content of the polyalkylene oxide chain as a constituent component of the polyalkylene oxide is usually within a range of 1.0 mass% or greater, preferably 2.0 mass% or greater, more preferably 3.0 mass% or greater, and usually 15 mass% or less, preferably 9.5% or less, and more preferably 8.0% or less, based on the solid mass of the modified epoxy resin.

The compound ($\alpha$) having one or more epoxy groups used may be a dimer acid diglycidyl ester. Such an epoxy compound results from introduction of a glycidyl group into a dimer acid produced by dimerizing an unsaturated fatty acid, and preferably has a linear, branched, and/or cyclic hydrocarbon group having from 10 to 150 carbons.

Any known unsaturated fatty acid can be used as the unsaturated fatty acid without limitation, and a higher unsaturated fatty acid having from 11 to 22 carbons is preferred from the viewpoint of the flexibility and hydrophobicity of the compound ($\alpha$) having one or more epoxy groups.

Any known higher unsaturated fatty acid can be used without limitation, and specific examples thereof are one or more selected from the group consisting of oleic acid, linoleic acid, linolenic acid, eicosenoic acid, docosenoic acid, branched octadecenoic acid, branched hexadecenoic acid, and undecylenic acid.

In the present invention, the compound ($\alpha$) having one or more epoxy groups used is preferably one or more epoxy compounds produced by reaction of an epihalohydrin with one or more selected from bis(4-hydroxyphenyl)-2,2-propane [bisphenol A], bis(4-hydroxyphenyl)methane [bisphenol F], bis(4-hydroxycyclohexyl)methane [hydrogenated bisphenol F], 2,2-bis(4-hydroxycyclohexyl)propane [hydrogenated bisphenol A], 4,4'-dihydroxybenzophenone, bis(4-hydroxyphenyl)-1,1-ethane, bis(4-hydroxyphenyl)-1,1-isobutane, bis(4-hydroxy-3-tert-butyl-phenyl)-2,2-propane, bis(2-hydroxynaphthyl)methane, tetra(4-hydroxyphenyl)-1,1,2,2-ethane, 4,4'-dihydroxydiphenyl sulfone, phenol novolac, and cresol novolac.

An epoxy compound produced by reaction between a polyphenolic compound and an epihalohydrin (for example, epichlorohydrin) is particularly preferable, and examples thereof include an epoxy compound derived from bisphenol A and represented by the following formula.

[Chem. 3]

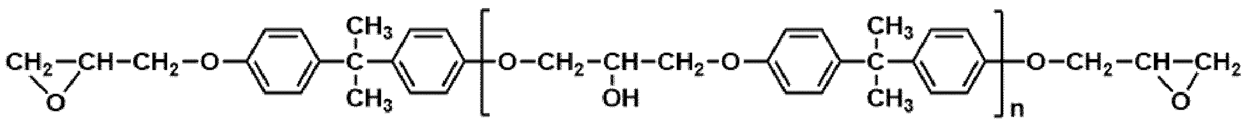

Examples of commercially available products of the epoxy compound include those marketed by Mitsubishi Chemical Corporation under the trade names of jER828EL, jER1002, jER1004, and jER1007.

Note that, as described above, a secondary hydroxyl group in the molecule of the modified epoxy resin in the above formula is not included in the polyfunctional groups. In addition, for example, in the modified epoxy resin produced by reaction of a terminal epoxy group in the above formula with a reactive functional group-containing compound, a hydroxyl group generated by the reaction of the epoxy group is not included in the polyfunctional groups in the present invention.

(Compound ($\beta$) Having Functional Group That Is Reactive with Epoxy Group and That Has Total Functionality of Functional Group of 3 or Greater)

The compound ($\beta$) having a functional group that is reactive with an epoxy group and that has a total functionality of the functional group of 3 or greater, which is used in the synthesis of the modified epoxy resin according to the first aspect of the present invention, can be used as a constituent component of the modified epoxy resin of the present invention when necessary, and can be suitably used as a polyfunctionalizing agent for polyfunctionalizing the modified epoxy resin.

In the present invention, examples of the "functional group that is reactive with an epoxy group" include a primary amino group (having a functionality of 2), a secondary amino group (having a functionality of 1), an alcoholic hydroxyl group (having a functionality of 1), a phenolic hydroxyl group (having a functionality of 1), an isocyanate group (having a functionality of 1), a carboxyl group (having a functionality of 1), a mercapto group (having a functionality of 1), a sulfonate group (having a functionality of 1), and a carboxylic anhydride group (having a functionality of 2).

The compound ($\beta$) may contain one or more types selected from the group consisting of a tri- or higher valent phenolic compound having a phenolic hydroxyl group, a tri- or higher valent isocyanate compound having an isocyanate group, a tri- or higher valent amine compound having an amino group, a tri- or higher valent carboxylic acid compound having a carboxyl group or an anhydride thereof, and a tri- or higher valent alcohol compound having an alcoholic hydroxyl group.

The compound ($\beta$) may also be a compound having a primary amino group, a secondary amino group, an alcoholic hydroxyl group, a phenolic hydroxyl group, an isocyanate group, a carboxyl group, a mercapto group, a sulfonate

group, and a carboxylic anhydride group in such a manner that the total functionality of the functional groups in the molecule is 3 or greater. Examples thereof include one or more selected from the group consisting of diaminobenzoic acid, dihydroxybenzoic acid, and diaminophenol.

When synthesizing the modified epoxy resin according to the first aspect of the present invention, the compound (β), used as a polyfunctionalizing agent and having a functional group that is reactive with an epoxy group and that has a total functionality of the functional group of 3 or greater, contains a compound (A) having "a" primary amino groups, "b" secondary amino groups, "c" alcoholic hydroxyl groups, "d" phenolic hydroxyl groups, "e" carboxyl groups, "f" mercapto groups, "g" sulfonate groups, "h" carboxylic anhydride groups, "i" epoxy groups, and "u" isocyanate groups, where a, b, c, d, e, f, g, h and u are each independently an integer of 0 or greater, i is an integer of 0 or 3 or greater, and $2a + b + c + d + e + f + g + 2h + i + u \geq 3$; when b = 1, $a \neq 1$, $c \neq 2$, or $d + e + f + g + 2h + i + u \geq 1$; and, when $d \geq 3$, $2a + b + c + e + f + g + 2h + i + u \geq 1$.

Among them, the compound (β) preferably contains one or more types selected from the group consisting of an amine compound having two or more primary amino groups, a carboxylic acid compound having three or more carboxyl groups or an anhydride thereof, an alcohol compound having three or more alcoholic hydroxyl groups, an epoxy compound having three or more epoxy groups, and an isocyanate compound having three or more isocyanate groups.

{Tri- or Higher Valent Phenolic Compound Having a Phenolic Hydroxyl Group}

The tri- or higher valent phenolic compound having a phenolic hydroxyl group that serves as the compound (β) or the compound (A) is one or more compounds having three or more hydroxyl groups bonded to an aromatic ring (phenolic hydroxyl groups) in the molecule.

Examples of the trivalent phenolic compound include one or more selected from the group consisting of pyrogallol, phloroglucinol, hydroxyhydroquinone, 5-methylpyrogallol, gallic acid, 1,8,9-trihydroxyanthracene, 4,4',4"-trihydroxytriphenylmethane, 4,4',4"-ethylidynetris(2-methylphenol), 4,4'-(2-hydroxybenzylidene)bis(2,3,6-trimethylphenol), 2,3,4-trihydroxydiphenylmethane, 2,4,6-tris(4-hydroxyphenyl)-1,3,5-triazine, 1,3,5-tris(4-hydroxyphenyl)benzene, 1,1,1 -tris(4-hydroxyphenyl)ethane, 1,1,3-tris(4-hydroxyphenyl)propane, 4,4'-[1-[4-[1-(4-hydroxy-3,5-dimethylphenyl)-1-methylethyl]phenyl]ethylidene]bis(2-methylphenol), 4,4'-[1-[4-[1-(4-hydroxyphenyl)-1-methylethyl]phenyl]ethylidene]bisphenol, 2,6-bis(4-hydroxy-3,5-dimethylbenzyl)-4-methylphenol, 1,1,3-tris(2-methyl-4-hydroxy-5-tert-butylphenyl)propane, 1,1,3-tris(2-methyl-4-hydroxy-5-tert-butylphenyl)butane, 1-[α-methyl-α-(4-hydroxyphenyl)ethyl]-3-[α,α- bis(4-hydroxyphenyl)ethyl]benzene, 1-[α-methyl-α-(4-hydroxyphenyl)ethyl]-4-[α,α-bis(4-hydroxyphenyl)ethyl]benzene, and α,α-bis(4-hydroxyphenyl)-4- (4-hydroxy-α,α-dimethylbenzyl)-ethylbenzene.

Examples of a tetra- or higher valent phenolic compound include one or more selected from the group consisting of phenolic resins produced by condensation reaction of 2,2'-methylenebis[6-(2-hydroxy-5-methylbenzyl)-p-cresol, 4-[bis(4-hydroxy-3-methylphenyl)methyl]benzene-1,2-diol, 1,1,2,2-tetrakis(p-hydroxyphenyl)ethane, α,α,α',α"-tetrakis(4-hydroxyphenyl)-p-xylene, 1,4,9,10-tetrahydroxyanthracene, 2,4,6-tris[(4-hydroxyphenyl)methyl]-1,3-benzenediol, hexahydroxybenzene, 2,3,6,7,10,11-hexahydroxytriphenylene hydrate, a phenolic compound (phenol, cresol, bisphenol compound, etc.) component with an aldehyde (formaldehyde, acetaldehyde, benzaldehyde, hydroxybenzaldehyde, crotonaldehyde, glyoxal, etc.) in the presence of a catalyst.

It is also possible to use one or more selected from the group consisting of phenolic resins produced by condensation reaction between a phenolic compound (phenol, cresol, bisphenol compounds, etc.) component and an aldehyde (formaldehyde, acetaldehyde, benzaldehyde, hydroxybenzaldehyde, crotonaldehyde, glyoxal, etc.) in the presence of a catalyst. For example, it is possible to use one or more selected from the group consisting of a compound represented by the following structural formula (A), phenol novolac resins, cresol novolac resins, bisphenol novolac resins (bisphenol A novolac resin, etc.), naphthol novolac resins, phenol aralkyl resins, terpene phenol resins, dicyclopentadiene phenol resins, phenol biphenylene resins, phenol-modified toluene formaldehyde resins, and co-condensed resins of pitch or oils, phenolic compounds, and formaldehyde.

[Chem. 4]

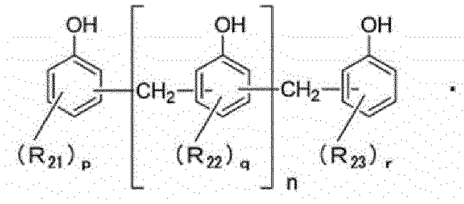

· · · (A)

where n represents an integer of from 1 to 20, p represents an integer of from 0 to 4, q represents an integer of from 0

to 3, and r represents an integer of from 0 to 4; $R_{21}$ to $R_{23}$ are each independently a monovalent group; $R_{22}$ may be different for each of the n repeating units; when a plurality of $R_{21}$s, $R_{22}$s and/or $R_{23}$s are present in an aromatic ring, they may be the same or different; and $R_{21}$ to $R_{23}$ may be bonded to each other to form a ring.

In the present invention, the tri- or higher valent phenolic compound used is preferably one or more compounds represented by the structural formula (A). $R_{21}$ to $R_{23}$ in the structural formula (A) are each preferably an organic group having hydrogen or carbon. Examples of the organic group having carbon include monovalent alkyl groups having from 1 to 20 carbons, such as a methyl group, an ethyl group, a propyl group, and a butyl group.

{Tri- or Higher Valent Isocyanate Compound Having an Isocyanate Group}

The tri- or higher valent isocyanate compound having an isocyanate group that serves as the compound (β) or the compound (A) may be one or more compounds having three or more isocyanate groups in the molecule.

For examples, the tri- or higher valent isocyanate compound having an isocyanate group used may be one or more compounds selected from the group consisting of: aliphatic triisocyanates, such as 2-isocyanatoethyl 2,6-diisocyanatohexanoate (lysine ester triisocyanate), 1,6-diisocyanato-3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane; alicyclic triisocyanates, such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)-heptane, bicycloheptane triisocyanate, and 6-(2-isocyanatoethyl)-2-isocyanatomethyl-2-(3-isocyanatopropyl)-bicyclo(2.2.1)heptane; araliphatic triisocyanates, such as 1,3,5-triisocyanatomethylbenzene; aromatic triisocyanates, such as triphenylmethane-4,4',4"-triisocyanate, 1,3,5-triisocyanatobenzene, and 2,4,6-triisocyanatotoluene; aromatic tetraisocyanates, such as 4,4'-diphenylmethane-2,2',5,5'-tetraisocyanate; and crude compounds of various polyisocyanates, such as crude MDI [polymethylene polyphenylisocyanate] (polymeric MDI) represented by the following structural formula (B) and crude TDI [crude tolylene diisocyanate].

[Chem. 5]

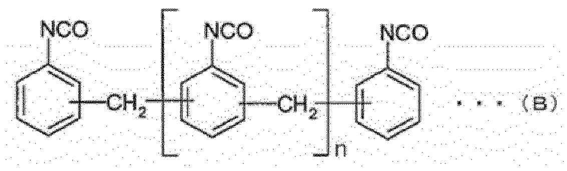

where n is an integer of 1 or greater.

The tri- or higher valent isocyanate compound having an isocyanate group used may also be one or more selected from the group consisting of compounds having three or more isocyanate groups in the molecule, for example, trimers and isocyanurates of the following compounds: aliphatic diisocyanates, such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, methylene diisocyanate, dimer acid diisocyanate, and methyl 2,6-diisocyanatohexanoate (commonly known as lysine diisocyanate); alicyclic diisocyanates, such as 1,3-cyclopentane diisocyanate, 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (commonly known as isophorone diisocyanate), 4-methyl-1,3-cyclohexylene diisocyanate (commonly known as hydrogenated TDI), 2-methyl-1,3-cyclohexylene diisocyanate, 1,3- or 1,4-bis(isocyanatomethyl)cyclohexane (commonly known as hydrogenated xylylene diisocyanate) or mixtures thereof, methylenebis(4,1-cyclohexanediyl) diisocyanate (commonly known as hydrogenated MDI), and norbornane diisocyanate; araliphatic diisocyanates, such as methylene bis(4,1-phenylene) diisocyanate (commonly known as MDI), 1,3- or 1,4-xylylene diisocyanate or mixtures thereof, ω,ω'-diisocyanato-1,4-diethylbenzene, and 1,3- or 1,4-bis(1-isocyanato-1-methylethyl)benzene (commonly known as tetramethylxylylene diisocyanate) or mixtures thereof; and aromatic diisocyanates, such as m-phenylene diisocyanate, p-phenylene diisocyanate, 4,4'-diphenyl diisocyanate, 1,5-naphthalene diisocyanate, 2,4-tolylene diisocyanate (commonly known as 2,4-TDI) or 2,6-tolylene diisocyanate (commonly known as 2,6-TDI) or mixtures thereof, 4,4'-toluidine diisocyanate, 4,4'-diphenyl ether diisocyanate, diphenylmethane-2,2'-diisocyanate, diphenylmethane-2,4'-diisocyanate, and diphenylmethane-4,4'-diisocyanate.

Further, examples of the tri- or higher valent isocyanate compound having an isocyanate group include one or

more compounds selected from the group consisting of dimers, trimers, biurets, allophanates, uretdiones, uretoimines, isocyanurates, oxadiazinetriones and crude compounds of these tri- or higher valent isocyanate compounds having an isocyanate group.

The tri- or higher valent isocyanate compound having an isocyanate group may be a blocked polyisocyanate compound, which is a compound of which the isocyanate group is blocked with a blocking agent.

Examples of the blocking agent include: phenolic compounds, such as phenol, cresol, xylenol, nitrophenol, ethylphenol, hydroxydiphenyl, butylphenol, isopropylphenol, nonylphenol, octylphenol, and methyl hydroxybenzoate; lactam-based compounds, such as ε-caprolactam, δ-valerolactam, γ-butyrolactam, and β-propiolactam; aliphatic alcohol-based compounds, such as methanol, ethanol, propanol, butanol, amyl alcohol, and lauryl alcohol; ether-based compounds, such as ethylene glycol monomethyl ether, ethylene glycol monoethyl ether, ethylene glycol monobutyl ether, diethylene glycol monomethyl ether, diethylene glycol monoethyl ether, propylene glycol monomethyl ether, and methoxymethanol; alcohol-based compounds, such as benzyl alcohol, glycolic acid, methyl glycolate, ethyl glycolate, butyl glycolate, lactic acid, methyl lactate, ethyl lactate, butyl lactate, methylol urea, methylol melamine, diacetone alcohol, 2-hydroxyethyl acrylate, and 2-hydroxyethyl methacrylate; oxime-based compounds, such as formamide oxime, acetoamide oxime, acetoxime, methyl ethyl ketoxime, diacetyl monoxime, benzophenone oxime, and cyclohexane oxime; active methylene-based compounds, such as dimethyl malonate, diethyl malonate, ethyl acetoacetate, methyl acetoacetate, and acetylacetone; mercaptan-based compounds, such as butyl mercaptan, t-butyl mercaptan, hexyl mercaptan, t-dodecyl mercaptan, 2-mercaptobenzothiazole, thiophenol, methylthiophenol, and ethylthiophenol; acid amide-based compounds, such as acetanilide, acetanisidide, acetotoluide, acrylamide, methacrylamide, acetic amide, stearic amide, and benzamide; imide-based compounds, such as succinimide, phthalimide, and maleimide; amine-based compounds, such as diphenylamine, phenylnaphthylamine, xylidine, N-phenylxylidine, carbazole, aniline, naphthylamine, butylamine, dibutylamine, and butylphenylamine; urea-based compounds, such as urea, thiourea, ethyleneurea, ethylenethiourea, and diphenylurea; carbamic ester-based compounds, such as phenyl N-phenylcarbamate; imine-based compounds, such as ethyleneimine and propyleneimine; sulfite-based compounds, such as sodium bisulfite and potassium bisulfite; and azole-based compounds. Examples of the azole-based compounds include one or more selected from the group consisting of pyrazole or pyrazole derivatives, such as pyrazole, 3,5-dimethylpyrazole, 3-methylpyrazole, 4-benzyl-3,5-dimethylpyrazole, 4-nitro-3,5-dimethylpyrazole, 4-bromo-3,5-dimethylpyrazole, and 3-methyl-5-phenylpyrazole; imidazole or imidazole derivatives, such as imidazole, benzimidazole, 2-methylimidazole, 2-ethylimidazole, and 2-phenylimidazole; and imidazoline derivatives, such as 2-methylimidazoline and 2-phenylimidazoline.

In the present invention, the tri- or higher valent compound having an isocyanate group that can be used is preferably one or more compounds from the group consisting of isocyanurates of aliphatic diisocyanates, isocyanurates of araliphatic diisocyanates, isocyanurates of aromatic diisocyanates, and crude compounds of polyisocyanates. The tri- or higher valent compound having an isocyanate group that can be used is particularly preferably one or more selected from the group consisting of hexamethylene diisocyanate isocyanurate, crude MDI (polymeric MDI), and crude TDI.

{Tri- or Higher Valent Amine Compound Having an Amino Group}

The tri- or higher valent amine compound having an amino group that serves as the compound (β) or the compound (A) is a compound having a primary or secondary amino group, and may be one or more compounds having a primary amino group (divalent) and/or a secondary amino group (monovalent) in the molecule, the valence of the amine compound being tri- or higher valent.

Examples of the tri- or higher valent amine compound having an amino group include one or more selected from the group consisting of ethylenediamine, p-diaminobenzene, m-diaminobenzene, 4,4'-diaminodiphenylmethane, 4,4'-diaminodiphenylmethane, diethylenetriamine, dipropylenetriamine, 2,2'-diaminodiethylamine, 3,3'-diamino-N-methyldipropylamine, 3,3'-diaminodipropylamine, bis(hexamethylene)triamine, 2,2'-bis(methylamino)-N-methyldiethylamine, triaminobenzene, triaminonaphthalene, tetraaminobenzene, tetraaminonaphthalene, triethylenetetramine, 3,3',4, 4'-tetraaminodiphenyl ether, 3,3',4,4'-tetraaminodiphenylsulfone, 3,3',4,4'-tetraaminodiphenyl ketone, 3,3',4,4'-tetraaminobiphenyl, 3,3',4,4'-tetraaminodiphenylmethane, 3,3',4,4'-tetraaminodiphenylcyclohexane, 3,3',4,4'-tetraaminodiphenylfluorene, 3,3',4,4'-tetraaminodiphenylthioether, 2,2-isopropylidene bis(3,4-diaminobenzene), 2,2-bis(3,4-diaminophenyl)propane, 2,2-hexafluoroisopropylidene bis(3,4-diaminobenzene), tetraethylenepentamine, pentaethylenehexamine, and polyamidoamine.

{Tri- or Higher Valent Carboxylic Acid Compound Having a Carboxyl Group or Anhydride Thereof}

The tri or higher valent carboxylic acid compound having a carboxyl group, or an anhydride thereof, that serves as the compound (β) or the compound (A) may be one or more compounds having three or more carboxyl groups, which may be anhydride groups, in the molecule.

For example, the tri- or higher valent carboxylic acid compound having a carboxyl group, or an anhydride

thereof, may be one or more selected from the group consisting of butanetricarboxylic acid, pentanetricarboxylic acid, trimellitic acid, trimesic acid, naphthalenetricarboxylic acid, butanetetracarboxylic acid, pentanetetracarboxylic acid, pyromellitic acid, cyclohexanetetracarboxylic acid, cyclobutanetetracarboxylic acid, 1,2,3,4-cyclopentanetetracarboxylic acid, dicyclohexyl-3,3',4,4'-tetracarboxylic acid, 4,4'-oxydiphthalic acid, benzophenonetetracarboxylic acid, biphenyltetracarboxylic acid, diphenylsulfonetetracarboxylic acid, 2,2-bis(3,4-dicarboxyphenyl)propane, 2,2-bis(3,4-dicarboxyphenoxyphenyl)propane, 4,4'-(hexafluoroisopropylidene)diphthalic acid, 1,2-bis(2,3-dicarboxyphenyl)ethane, bis(dicarboxyphenyl)ethane, bis(3,4-dicarboxyphenyl)methane, 4,4'-(p-phenylenedioxy)diphthalic acid, and anhydrides thereof.

{Tri- or Higher Valent Alcohol Compound Having an Alcoholic Hydroxyl Group}

The tri- or higher valent alcohol compound having an alcoholic hydroxyl group that serves as the compound (β) or the compound (A) may be one or more compounds having three or more alcoholic hydroxyl groups in the molecule. For example, the tri- or higher valent alcohol compound having an alcoholic hydroxyl group may be one or more selected from the group consisting of glycerin, diglycerin, trimethylolethane, trimethylolpropane, trioxyisobutane, butanetriol, pentanetriol, hexanetriol, sorbitol, triethanolamine, polyoxypropylenetriol, polyoxyethylene triol, polyoxyethylene propylene triol, pentaerythritol, and dipentaerythritol.

{Epoxy Compound Having Three or More Epoxy Groups}

Examples of the epoxy compound having three or more epoxy groups and that serves as compound (β) or compound (A) include one or more selected from the group consisting of: an epoxy resin produced by glycidylation of a trisphenol such as 1,1,1-tris(4-hydroxyphenyl)methane, 4,4-(1-(4-(1-(4-hydroxyphenyl)-1-methylethyl)phenyl)ethylidene)bisphenol, and α,α, α'-tris(4-hydroxyphenyl)-1-ethyl-4-isopropylbenzene; an epoxy resin produced by glycidylation of a tetrakisphenol such as 1,1,2,2,-tetrakis(4-hydroxyphenyl)ethane; an epoxy novolac resin and the like produced by glycidylation of a novolac such as phenol novolac, cresol novolac, bisphenol A novolac, brominated phenol novolac, and brominated bisphenol A novolac; an epoxy resin produced by glycidylation of a polyhydric phenol with a valence of 5 or greater; an aliphatic ether-type epoxy resin produced by glycidylation of a polyhydric alcohol such as glycerin, diglycerin, polyglycerin, and sorbitol; an ester-type epoxy resin produced by glycidylation of a polycarboxylic acid such as trimellitic acid, pyromellitic acid, and benzophenonetetracarboxylic acid; a glycidyl-type epoxy resin, such as a glycidylated product of an amine compound such as 3,3',4,4'-tetraaminodiphenylmethane, or an amine-type epoxy resin such as triglycidyl isocyanurate; and an alicyclic epoxy resin such as 3,4-epoxycyclohexylmethyl-3',4'-epoxycyclohexanecarboxylate. Among them, one or more epoxy resins produced by glycidylation of a tri- or higher valent phenol are preferable.

{Other Compounds}

Other than the compounds described above, the compound (β) or the compound (A) may be a compound in which a total of three or more of the following groups are contained in the molecule: primary amino group, secondary amino group, alcoholic hydroxyl group, phenolic hydroxyl group, isocyanate group, carboxyl group, mercapto group, sulfonate group, and carboxylic anhydride group. Examples thereof include one or more selected from the group consisting of diaminobenzoic acid, dihydroxybenzoic acid, diaminophenol, diethanolamine, and triethanolamine.

(Compound (γ) Having Functional Group That Is Reactive with Epoxy Group and That Has Total Functionality of Functional Group of 1 or 2)

The compound (γ) having a functional group that is reactive with an epoxy group and that has a total functionality of the functional group of 1 or 2, which is used in the synthesis of the modified epoxy resin according to the first aspect of the present invention, can be suitably used as an end-capping agent or a chain extender for end-capping or chain-extending the modified epoxy resin of the present invention.

In the present invention, examples of the "functional group that is reactive with an epoxy group" include the same functional groups serving as the "functional group that is reactive with an epoxy group" in the compound (β).

The compound (γ) having a functional group that is reactive with an epoxy group and that has a total functionality of the functional group of 1 or 2, which is used in the synthesis of the modified epoxy resin according to the first aspect of the present invention, contains a compound (B) having "j" primary amino groups, "k" secondary amino groups, "m" alcoholic hydroxyl groups, "n" phenolic hydroxyl groups, "p" carboxyl groups, "q" mercapto groups, "r" sulfonate groups, "s" carboxylic anhydride groups, and "t" isocyanate groups, where j, k, m, n, p, q, r, s, and t are each independently an integer of 0 or greater, and $2j + k + m + n + p + q + r + 2s + t \leq 2$.

The compound (γ) having a functional group that is reactive with an epoxy group and that has a total functionality

of the functional group of 1 or 2 is contained in the modified epoxy resin according to the present invention as a constituent component, and may contain a compound having one or more active hydrogen in one molecule. Examples thereof include one or more types selected from the group consisting of monovalent or divalent phenolic compounds, alcohol compounds, carboxylic acid compounds, and isocyanate compounds.

Further, the compound (γ) preferably contains a compound (γ1) having no amino group, and the compound (γ) more preferably has no amino group.

A divalent phenolic compound serving as the compound (γ) or the compound (B) is a compound having two hydroxyl groups bonded to an aromatic ring in the molecule. Examples of the divalent phenolic compound that can be used include one or more selected from the group consisting of bis(4-hydroxyphenyl)-2,2-propane [bisphenol A], bis(4-hydroxyphenyl)methane [bisphenol F], bis(4-hydroxycyclohexyl)methane [hydrogenated bisphenol F], 2,2-bis(4-hydroxycyclohexyl)propane [hydrogenated bisphenol A], 4,4'-dihydroxybenzophenone, bis(4-hydroxyphenyl)-1, 1-ethane, bis(4-hydroxyphenyl)-1, 1-isobutane, bis(4-hydroxy-3-tert-butylphenyl)-2,2-propane, bis(2-hydroxynaphthyl)methane, tetra(4-hydroxyphenyl)-1,1,2,2-ethane, 4,4'-dihydroxydiphenyl sulfone, and biphenol.

In the present invention, when the compound (β) having a tri- or higher valent functional group that is reactive with an epoxy group contains a compound represented by the above structural formula (A), the compound (γ) preferably contains a compound represented by the following structural formula (C):

[Chem. 6]

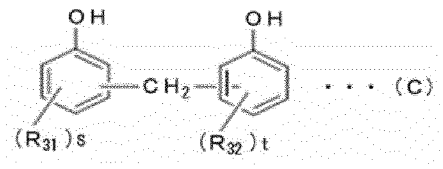

where s represents an integer of 0 to 4, and t represents an integer of 0 to 4; $R_{31}$ and $R_{32}$ each independently represent a monovalent group; when a plurality of $R_{31}$s and/or $R_{32}$s are present in an aromatic ring, they may be the same as or different; $R_{31}$ and/or $R_{32}$ may be bonded to each other to form a ring.

The divalent alcohol compound that serves as the compound (γ) or the compound (B) may be, for example, one or more selected from the group consisting of alkylene glycols (ethylene glycol, propylene glycol, butylene glycol, 1,6-hexanediol, and the like), and glycerin.

The divalent carboxylic acid compound may be, for example, one or more selected from the group consisting of oxalic acid, malonic acid, succinic acid, glutaric acid, adipic acid, phthalic acid, dimer acid, and anhydrides thereof.

Examples of a divalent isocyanate compound that serves as the compound (γ) or the compound (B) include one or more selected from the group consisting of: aliphatic diisocyanates, such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, methylene diisocyanate, dimer acid diisocyanate, and methyl 2,6-diisocyanatohexanoate (commonly known as lysine diisocyanate); alicyclic diisocyanates, such as 1,3-cyclopentane diisocyanate, 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (commonly known as isophorone diisocyanate), 4-methyl-1,3-cyclohexylene diisocyanate (commonly known as hydrogenated TDI), 2-methyl-1,3-cyclohexylene diisocyanate, 1,3- or 1,4-bis(isocyanatomethyl)cyclohexane (commonly known as hydrogenated xylylene diisocyanate) or mixtures thereof, methylenebis(4,1-cyclohexanediyl) diisocyanate (commonly known as hydrogenated MDI), and norbornane diisocyanate; araliphatic diisocyanates, such as methylene bis(4,1-phenylene) diisocyanate (commonly known as MDI), 1,3- or 1,4-xylylene diisocyanate or mixtures thereof, ω,ω'-diisocyanato-1,4-diethylbenzene, and 1,3- or 1,4-bis(1-isocyanato-1-methylethyl)benzene (commonly known as tetramethylxylylene diisocyanate) or mixtures thereof; aromatic diisocyanates, such as m-phenylene diisocyanate, p-phenylene diisocyanate, 4,4'-diphenyl diisocyanate, 1,5-naphthalene diisocyanate, 2,4-tolylene diisocyanate (commonly known as 2,4-TDI) or 2,6-tolylene diisocyanate (commonly known as 2,6-TDI) or mixtures thereof, 4,4'-toluidine diisocyanate, 4,4'-diphenyl ether diisocyanate, diphenylmethane-2,2'-diisocyanate, diphenylmethane-2,4'-diisocyanate, and diphenylmethane-4,4'-diisocyanate; and diisocyanate compounds that are dimers, trimers, biurets, allophanates, uretdiones, uretimines, oxadiazinetriones, and crude compounds of these diisocyanates.

The diisocyanate compound may be a blocked polyisocyanate compound, which is a compound of which the isocyanate groups in the diisocyanate or its derivative are blocked with a blocking agent. The blocking agent may be the same as the blocking agent for the tri- or higher valent isocyanate compound having an isocyanate group.

In the present invention, the diisocyanate compound is preferably one or more selected from the group consisting

of aliphatic diisocyanates, araliphatic diisocyanates, and aromatic diisocyanates. Particularly preferably, the diisocyanate compound is one or more selected from the group consisting of hexamethylene diisocyanate, xylylene diisocyanate, isophorone diisocyanate, and monomeric MDI, which is a compound represented by the following structural formula (B'), where n = 0.

[Chem. 7]

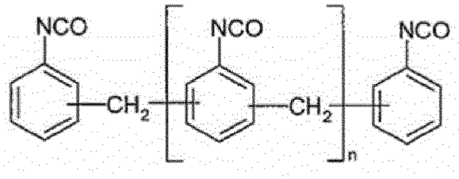
· · · (B')

The compound (γ) or the compound (B) used may be one or more selected from the group consisting of monophenolic compounds (such as phenol, cresol, nonylphenol, and nitrophenol), monoalcohol compounds (such as oxyl alcohol, 2-ethylhexanol, stearyl alcohol, ethylene glycol monobutyl ether, ethylene glycol monohexyl ether, propylene glycol monobutyl ether, and propylene glycol monohexyl ether), and monocarboxylic acid compounds (saturated or unsaturated fatty acids such as formic acid, acetic acid, propionic acid, butyric acid, valeric acid, 2-ethylhexanoic acid (octylic acid), caproic acid, caprylic acid, stearic acid, oleic acid, and linoleic acid).

The compound (γ) or the compound (B) used may also be one or more selected from the group consisting of hydroxycarboxylic acids such as glycolic acid, dimethylolpropionic acid, hydroxypropylvalic acid, lactic acid, and citric acid, and mercaptoalkanols such as mercaptoethanol.

In addition, a compound (γ1-1-1) having a monovalent functional group that is reactive with an epoxy group described below can be suitably used.

The compound (γ) having a functional group that is reactive with an epoxy group and that has a total functionality of the functional group of 1 or 2 preferably contains the compound (γ1) having no amino group, and the modified epoxy resin of the present invention preferably has substantially no amine value derived from the compound (γ1). Note that, "having substantially no amine value derived from the compound (γ1)" means that in the modified epoxy resin having the compound (γ), the amine value derived from the compound (γ1) is 10 mg KOH/g or less, preferably 5 mg KOH/g or less, and more preferably 0 mg KOH/g.

Further, the compound (γ1) preferably contains a compound (γ1-1) having a functional group that is reactive with an epoxy group in the compound (γ) and that has a functionality of 1. More preferably, the compound (γ1) contains both the compound (γ1-1) having a functional group that is reactive with an epoxy group in the compound (γ) and that has a total functionality of the functional group of 1 and a compound (γ1-2) having a functional group that is reactive with an epoxy group and that has a total functionality of the functional group of 2.

<Blending Amount of Each Component>

The blending amounts of the compound (α), the compound (β), and the compound (γ) used in the production of the modified epoxy resin according to the present invention can be adjusted as appropriate depending on the target epoxy equivalent and the like.

For example, based on the total solid mass of the compound (α), the compound (β), and the compound (γ), the blending amount of each component can be set to the following ranges.

· Compound (α): for example, 0.5 mass% or greater, preferably 1 mass% or greater, more preferably 10 mass% or greater, and even more preferably 20 mass% or greater, and for example, 80 mass% or less, preferably 70 mass% or less, and more preferably 60 mass% or less.

· Compound (β): for example, 0 mass% or greater, preferably 1 mass% or greater, more preferably 5 mass% or greater, and even more preferably 10 mass% or greater, and for example, 50 mass% or less, preferably 50 mass% or less, more preferably 40 mass% or less, and even more preferably 35 mass% or less.

· Compound (γ): for example, 0 mass% or greater, preferably 5 mass% or greater, more preferably 10 mass% or greater, and even more preferably 20 mass% or greater, and for example, 95 mass% or less, preferably 90 mass% or less, more preferably 70 mass% or less, and even more preferably 60 mass% or less.

When the content of the polyfunctionalizing agent is more than 50 mass%, the reactivity of the modified epoxy resin is too high, leading to a possibility of gelation during synthesis or deteriorated storage stability of the coating material.

The modified epoxy resin according to the first aspect of the present invention has excellent curability, in

particular when a low-activity catalyst is used or when used at low temperatures, and has excellent storage stability. Further, an electrodeposition coating material prepared using the modified epoxy resin has excellent finish properties of coating film and corrosion resistance.

<Terminal Functional Group of Modified Epoxy Resin>

In the modified epoxy resin according to the first aspect of the present invention, some or all of the terminal functional groups may be groups other than epoxy groups. In the present invention, it is preferable that some or all of the terminal functional groups are groups other than epoxy groups.

For example, after the synthesis of the modified epoxy resin described in the first aspect, the epoxy group of the polyfunctional epoxy resin may be reacted with a reactive functional group-containing compound to prepare a modified epoxy resin having a different reactive functional group at a terminal. However, when one epoxy group at a terminal of the modified epoxy resin reacts with the reactive functional group-containing compound (e.g., diethanolamine) to form a plurality of terminal functional groups (in the case of diethanolamine, an epoxy group reacts with a secondary amino group of diethanolamine to form two hydroxyl groups derived from diethanolamine and a hydroxyl group derived from the epoxy group), "the number of polyfunctional groups" in the present invention is one, as described above.

The functional group that is reactive with an epoxy group is not particularly limited as long as it can react with an epoxy group, and examples thereof include a carboxyl group, a primary or secondary amino group, and a hydroxyl group.

In the above-mentioned case (modified epoxy resin), the calculation of the average polyfunctionalization degree (X1) and the average polyfunctionalization concentration (Y1) can also be carried out in the same manner.

When the compound (γ) contains the compound (γ1-1), the terminals of the modified epoxy resin are blocked by the compound (γ1-1), and some or all of the terminal functional groups may be groups other than epoxy groups.

In particular, it is preferable that at least some of the terminals of the modified epoxy resin according to the present invention have an organic group represented by the following structural formula (1) or the following structural formula (2).

[Chem. 8]

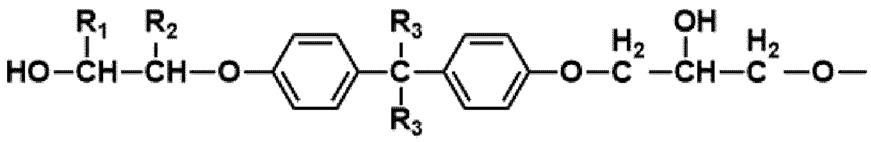

· · · Formula (1)

where $R_1$ and $R_2$ each independently represent a hydrogen atom, a hydroxymethyl group, an alkyl group having from 1 to 12 carbons, or an alkyloxymethyl group having from 1 to 13 carbons; $R_3$ represents a hydrogen atom or a methyl group, and a plurality of $R_3$s may be the same as or different.

[Chem. 9]

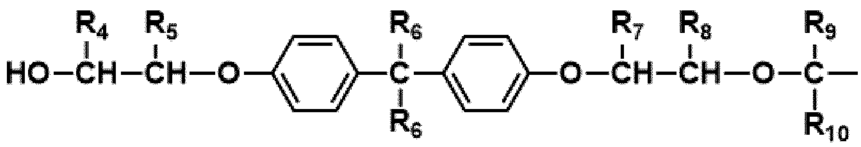

· · · Formula (2)

where $R_4$ and $R_5$ each independently represent a hydrogen atom, a hydroxymethyl group, an alkyl group having from 1 to 12 carbons, or an alkyloxymethyl group having from 1 to 13 carbons; $R_6$ represents a hydrogen atom or a methyl group, and a plurality of $R_6$s may be the same or different; and $R_7$, $R_8$, $R_9$ and $R_{10}$ each independently represent a hydrogen atom or an alkyl group having from 1 to 12 carbons.

The modified epoxy resin having the terminals described above can be produced by reacting the compound (α) with the compound (γ1-1-1).

Examples of the compound (γ1-1-1) include 2,2-bis[4-(2-hydroxyethoxy)phenyl]propane, 2,2-bis[4-(2-hydroxypropoxy)phenyl]propane, 2,2-bis[4-(2-hydroxybutoxy)phenyl]propane, a reaction product of a heterocyclic compound (γ1-1-1-1) and a diol compound (γ1-1-1-2), and a reaction product of hydroxyalkyl chloride and a diol compound (γ1-1-1-2).

These compounds can be used alone or in a combination of two or more. Among them, the compound (γ1-1-1) is preferably a modifier produced by reacting the heterocyclic compound (γ1-1-1-1) with the diol compound (γ1-1-1-2).

Examples of the heterocyclic compound (γ1-1-1-1) include alkylene carbonates such as ethylene carbonate and propylene carbonate; and alkylene oxides such as ethylene oxide, propylene oxide, and butylene oxide. These compounds may be used alone or in a combination of two or more.

Examples of the diol compound (γ1-1-1-2) include polyphenol compounds such as bisphenol A, bisphenol F, and bisphenol E. These compounds may be used alone or in a combination of two or more.

The reaction between the heterocyclic compound (γ1-1-1-1) and the diol compound (γ1-1-1-2) can usually be carried out in an appropriate solvent at a temperature of from approximately 60 to approximately 250°C, preferably from approximately 70 to approximately 200°C, for approximately 1 to 25 hours, and preferably approximately 1 to 12 hours. Examples of the solvent include hydrocarbons such as toluene, xylene, cyclohexane, and n-hexane; esters such as methyl acetate, ethyl acetate, and butyl acetate; ketones such as acetone, methyl ethyl ketone, methyl isobutyl ketone, and methyl amyl ketone; amides such as dimethylformamide and dimethylacetamide; alcohols such as methanol, ethanol, n-propanol, and isopropanol, and ether alcohol compounds such as ethylene glycol monobutyl ether and diethylene glycol monoethyl ether; and mixtures thereof.

Through reaction of the compound (α) and the compound (γ1-1-1), a modified epoxy resin in which at least some of the resin terminals have an organic group represented by the structural formula (1) above or the structural formula (2) above can be produced.

<Modified Epoxy Resin According to Second Aspect>

A modified epoxy resin according to a second aspect of the present invention is a modified epoxy resin produced by reaction of at least the following (i) and (ii),

(i) a compound (α) having one or more epoxy groups,
(ii) a compound (β) having a functional group that is reactive with an epoxy group and that has a total functionality of the functional group of 3 or greater,

wherein the compound (β) is a polyfunctionalizing agent containing a compound (A) having "a" primary amino groups, "b" secondary amino groups, "c" alcoholic hydroxyl groups, "e" carboxyl groups, "f" mercapto groups, "g" sulfonate groups, "h" carboxylic anhydride groups, and "i" epoxy groups, where a, b, c, e, f, g, and h are each independently an integer of 0 or greater, i is an integer of 0 or 3 or greater, $2a + b + c + e + f + g + 2h + i \geq 3$, and, when $b = 1$, $a \neq 1$, $c \neq 2$, or $e + f + g + 2h + i \geq 1$.

Note that, the modified epoxy resin according to the second aspect may contain another component in addition to the components (i) and (ii). For example, the compound (γ) having a functional group that is reactive with an epoxy group and that has a total functionality of the functional group of 1 or 2, which is included in the description of the modified epoxy resin according to the first aspect, can be suitably used.

The compound (α), the compound (β), the compound (A), the compound (γ), and the compound (B) used to prepare the modified epoxy resin according to the second aspect may be the same as the compound (α), the compound (β), the compound (A), the compound (γ), and the compound (B) used to prepare the modified epoxy resin according to the first aspect, respectively. Among them, for the modified epoxy resin according to the second aspect, the compound (β) preferably has a primary amino group, a secondary amino group, an alcoholic hydroxyl group, a carboxyl group, a mercapto group, a sulfonate group, a carboxylic anhydride group, and an epoxy group, and preferably contains one or more selected from the group consisting of an amine compound having two or more amino groups, a carboxylic acid compound having three or more carboxyl groups or an anhydride thereof, an alcohol compound having three or more alcoholic hydroxyl groups, and an epoxy compound having three or more epoxy groups.

Further, the blending amount of each component in the modified epoxy resin according to the second aspect may be the same as the blending amount of each component in the modified epoxy resin according to the first aspect.

The modified epoxy resin according to the second aspect of the present invention has excellent curability, in particular when a low-activity catalyst is used or when used at low temperatures, and has excellent storage stability. Further, an electrodeposition coating material prepared using the modified epoxy resin has excellent finish properties of coating film and corrosion resistance.

In the modified epoxy resins according to the second aspect (having the compound (β) as an essential component), the average polyfunctionalization degree (X1) per molecule of the modified epoxy resin represented by the equation (1) is preferably 0.10 or greater. In this case, the modified epoxy resin according to the second aspect is a subordinate concept of the modified epoxy resin according to the first aspect.

(Blending Amount of Each Component)

The blending amounts of the compound (α) having one or more epoxy groups and the compound (β) having a functional group that is reactive with an epoxy group and that has a total functionality of the functional group of 3 or greater, which are used in the production of the modified epoxy resin according to the second aspect of the present invention, can be appropriately adjusted depending on the target epoxy equivalent and the like.

For example, based on the total solid mass of the compound (α) and the compound (β), the blending amount of each component can be set to the following ranges.

Compound (α): for example, 50 mass%% or greater, preferably 65 mass% or greater, and for example, 99.9 mass% or less, preferably 95 mass% or less, and more preferably 92 mass% or less.

Compound (β): for example, 0.1 mass% or greater, preferably 0.2 mass% or greater, and more preferably 0.5 mass% or greater, and for example, 50 mass% or less, preferably 30 mass% or less, and more preferably 20 mass% or less.

When the content of the compound (β) is less than 0.1 mass%, the polyfunctional modification of the modified epoxy resin may be insufficient, which may lead to failure of production of a polyfunctional and highly reactive modified epoxy resin. Meanwhile, when the content of the compound (β) is more than 50 mass%, the reactivity of the modified epoxy resin is too high, leading to a possibility of gelation during synthesis, deteriorated storage stability of coating material, or deteriorated finish properties of coating film.

In the modified epoxy resin according to the second aspect of the present invention, the average polyfunctionalization degree (X1) per molecule of the modified epoxy resin is usually 0.1 or greater, preferably 0.3 or greater, more preferably 0.6 or greater, even more preferably 0.7 or greater, and particularly preferably 1.3 or greater. The upper limit value is not particularly limited, but may be set to preferably 10.0 or less, more preferably 6.0 or less, and particularly preferably 3.7 or less.

In the modified epoxy resin according to the second aspect of the present invention, the average polyfunctionalization concentration (Y1) per 1 g of the solid content of the modified epoxy resin is 0.10 (mmol/g) or greater, and preferably 0.40 (mmol/g) or greater. The upper limit value is not particularly limited and may be, for example, 5.00 (mmol/g) or less, preferably 3.00 (mmol/g) or less, and more preferably 2.00 (mmol/g) or less.

<Method of Producing Modified Epoxy Resin>

A method of producing the modified epoxy resin according to the present invention (the modified epoxy resin according to the first aspect and the modified epoxy resin according to the second aspect) is not particularly limited.

For example, a first method of producing the modified epoxy resin of the present invention is a method including mixing the compound (α) and the compound (β) and/or the compound (γ) and carrying out the reaction in an appropriate solvent at a temperature of from approximately 80 to approximately 190°C, preferably from approximately 90 to approximately 170°C, for approximately 1 to 6 hours, preferably approximately 1 to 5 hours.

In the present invention, the modified epoxy resin can be polyfunctionalized by using, for example, the compound (β) which is a polyfunctionalizing agent. In addition, for example, the modified epoxy resin can be chain-extended with a compound (γ) having two active hydrogens in one molecule (a compound having a functional group that is reactive with an epoxy group and that has a total functionality of the functional group of 2).

For example, a second method of producing the modified epoxy resin of the present invention is a method including reacting at least the compound (α) and the compound (β) to produce an epoxy resin (X), and then reacting at least the compound (γ). The reaction temperature can be the same as that in the first production method.

The solvent used in the method of producing the modified epoxy resin is not particularly limited as long as it is a compound that functions as a solvent without reacting with the epoxy compound or the like in the reaction system. For example, the solvent may be one or more selected from the group consisting of: hydrocarbons such as toluene, xylene, cyclohexane, and n-hexane; esters such as methyl acetate, ethyl acetate, and butyl acetate; ketones such as acetone, methyl ethyl ketone, methyl isobutyl ketone, and methyl amyl ketone; amides such as dimethylformamide and dimethylacetamide; alcohols such as methanol, ethanol, n-propanol, and isopropanol, and ether alcohol compounds such as ethylene glycol monobutyl ether and diethylene glycol monoethyl ether.

<Weight-Average Molecular Weight of Modified Epoxy Resin>

The weight-average molecular weight of the modified epoxy resin according to the present invention (the modified epoxy resin according to the first aspect and the modified epoxy resin according to the second aspect) is not particularly limited.

For example, the weight-average molecular weight of the modified epoxy resin is usually 500 or more, preferably 1000 or more, and more preferably 1500 or more, and usually 50000 or less, preferably 20000 or less, and more preferably

10000 or less, from the viewpoints of finish properties, corrosion resistance, and the like.

Unless otherwise specified, the weight-average molecular weight in the present specification is a value calculated by converting a retention time (retention capacity) measured using gel permeation chromatograph (GPC) into a molecular weight of polystyrene using a retention time (retention capacity) of standard polystyrene having a known molecular weight measured under the same conditions. Specifically, the measurement can be performed using "HLC8120GPC" (trade name, available from Tosoh Corporation) as the gel permeation chromatograph and four columns "TSKgel G-4000HXL", "TSKgel G-3000HXL", "TSKgel G-2500HXL", and "TSKgel G-2000HXI," (trade names, all available from Tosoh Corporation) under conditions of tetrahydrofuran as a mobile phase at a measurement temperature of 40°C, a flow rate of 1 mL/min, and a RI detector.

[Amine-Modified Epoxy Resin]

The present invention further relates to an amine-modified epoxy resin.

The amine-modified epoxy resin can be produced by reacting the modified epoxy resin according to the second aspect with an amine compound. The modified epoxy resin according to the second aspect is preferably a resin that has not been reacted with an amine compound in advance.

If necessary, an epoxy compound that has been reacted with an amine compound in advance may be used as the epoxy compound used to produce any modified epoxy resin according to the second aspect. In this case, the amount of the amine compound used can be appropriately determined so that the amine value of the amine-modified epoxy resin reaches a desired value. The amount of the amine compound used is preferably 99 mol% or less relative to the total amount of the amine compounds.

<Amine Compound>

The amine compound is not particularly limited as long as it is an amine compound having reactivity with the modified epoxy resin. For example, the amine compound may be one or more selected from the group consisting of: mono-alkylamines or di-alkylamines, such as monomethylamine, dimethylamine, monoethylamine, diethylamine, dipropylamine, dibutylamine, dihexylamine, dioctylamine, monoisopropylamine, diisopropylamine, monobutylamine, monooctylamine, methylbutylamine, and dibutylamine; alkanolamines, such as monoethanolamine, N-methylethanolamine, N-ethylethanolamine, diethanolamine, mono(2-hydroxypropyl)amine, di(2-hydroxypropyl)amine, N-butylethanolamine, dipropanolamine, monomethylaminoethanol, N-(2-hydroxypropyl)ethylenediamine, 3-methylamino-1,2-propanediol, 3-tert-butylamino-1,2-propanediol, N-methylglucamine, and N-octylglucamine; alkylene polyamines, such as polymethylene diamine, polyether diamine, ethylene diamine, propylene diamine, butylene diamine, hexamethylene diamine, trimethylhexamethylene diamine, triethylenetetramine, dimethylaminopropylamine, diethylenetriamine, diethylaminopropylamine, and bis(4-aminobutyl)amine; aromatic or alicyclic polyamines, such as mencenediamine, isophoronediamine, bis(4-amino-3-methylcyclohexyl)methane, metaxylylenediamine, metaphenylenediamine, naphthylenediamine, and dimethylaminomethylbenzene; polyamines having a heterocyclic ring, such as piperazine, 1-methylpiperazine, 3-pyrrolidinol, 3-piperidinol, and 4-pyrrolidinol; epoxy-added polyamines produced by adding 1 to 30 moles of an epoxy group-containing compound to 1 mole of the above polyamine; polyamide polyamines containing at least one primary or secondary amine in the molecule of a polyamide resin produced by condensation of the polyamine above with an aromatic acid anhydride, cyclic aliphatic acid anhydride, aliphatic acid anhydride, halogenated acid anhydride, and/or dimer acid; and ketiminated amines produced by reacting at least one primary or secondary amine in the above polyamines with a ketone compound.

The ketone compound for producing the ketiminated amines is not particularly limited as long as it reacts with the primary or secondary amine of the polyamines above to form a ketiminated product and is further hydrolyzed in an aqueous coating material composition. For example, one or more selected from the group consisting of methyl isopropyl ketone (MIPK), diisobutyl ketone (DIBK), methyl isobutyl ketone (MIBK), diethyl ketone (DEK), ethyl butyl ketone (EBK), ethyl propyl ketone (EPK), dipropyl ketone (DPK), and methyl ethyl ketone (MEK) can be used. In the present invention, when a ketiminated amine is used, the ketimination ratio thereof is not particularly limited. For example, the ketimination ratio is preferably 80% or greater.

The amine-modified epoxy resin may be modified with a modifier as necessary. Such a modifier is not particularly limited as long as it is a resin or compound having reactivity with the modified epoxy resin, and may be, for example, one or more types selected from the group consisting of polyols, polyether polyols, polyester polyols, polyamidoamines, polycarboxylic acids, fatty acids, polyisocyanate compounds, compounds produced by reaction of polyisocyanate compounds, lactone compounds such as ε-caprolactone, acrylic monomers, compounds produced by polymerization reaction of acrylic monomers, xylene formaldehyde compounds, and epoxy compounds.

In addition, the modifier may also be the component described as the "terminal functional group of modified epoxy resin" of the modified epoxy resin according to the first aspect.

The proportion of the modifier used is not strictly limited and can be appropriately changed depending on the application of the coating material composition and the like. From the viewpoint of improving finish properties and corrosion resistance, the proportion of the modifier used is usually from 0 to 50 mass%, preferably from 0.1 to 30 mass%, and more preferably from 1 to 20 mass%, based on the solid mass of the amine-modified epoxy resin.

<Method of Producing Amine-Modified Epoxy Resin>

The reaction between the modified epoxy resin according to the second aspect and the amine compound can be carried out, for example, in an appropriate solvent at a temperature of from approximately 80 to approximately 190°C, preferably from approximately 90 to approximately 170°C, for approximately 1 to 6 hours, preferably approximately 1 to 5 hours.

The solvent used in the reaction is not particularly limited. For example, the same solvent as that used in the above-described method of producing the modified epoxy resin can be used.

The weight-average molecular weight of the amine-modified epoxy resin is usually 1000 or more, preferably 1300 or more, more preferably 1600 or more, and is, for example, 50000 or less, preferably 20000 or less, more preferably 10000 or less, from the viewpoints of finish properties, corrosion resistance, and the like.

The amine value of the amine-modified epoxy resin is usually 5 mg KOH/g or greater, preferably 10 mg KOH/g or greater, and more preferably 20 mg KOH/g or greater, based on the solid content of the resin, from the viewpoint of improving the water dispersibility and the corrosion resistance. The upper limit value is not particularly limited, and is, for example, 200 mg KOH/g or less, and preferably 150 mg KOH/g or less.

The amine value in the present specification is measured in accordance with JIS K 7237-1995. All amine values are amine values per resin solid content (mg KOH/g).

[Aqueous Resin Dispersion]

An aqueous resin dispersion of the present invention is produced by dispersing, in an aqueous medium, one or more selected from the group consisting of the modified epoxy resin according to the first aspect, the modified epoxy resin according to the second aspect, and a modified product of the foregoing.

Examples of the dispersion method in aqueous medium include a method of mixing an aqueous medium with a mixed solution containing the modified epoxy resin and an emulsifier (including a highly polar resin), and a method of mixing an aqueous medium with a solution of a modified epoxy resin added with a highly polar functional group. Any of these methods can be suitably used.

For example, the aqueous resin dispersion according to the present invention can be obtained by dispersing the modified epoxy resin according to the first aspect or the modified epoxy resin according to the second aspect (including the amine-modified epoxy resin) in an aqueous medium. Moreover, the aqueous resin dispersion according to the present invention can be obtained by neutralizing a component containing the following (i) or (ii) with an acid compound and dispersing the neutralized product in an aqueous medium:

(i) An amine-modified epoxy resin produced by reacting the modified epoxy resin according to the second aspect with an amine compound, and/or

(ii) A mixture of the modified epoxy resin according to the first aspect and the amine-modified epoxy resin of (i) and/or an amine-added epoxy resin other than (i).

In the present invention, the term "aqueous resin dispersion" refers to a material in a state where the modified epoxy resin component does not dissolve in the aqueous medium but exists in the form of particles.

The content of the one or more modified epoxy resins, selected from the modified epoxy resin according to the first aspect, the modified epoxy resin according to the second aspect, and a modified product of the foregoing, in the aqueous resin dispersion is, for example, 10 mass% or greater, preferably 30 mass% or greater, and for example, 100 mass% or less, preferably 80 mass% or less, based on the solid content.

The aqueous resin dispersion of the present invention is preferably produced by mixing a curing agent (such as a blocked polyisocyanate compound) and one or more selected from the group consisting of the modified epoxy resin according to the first aspect, the modified epoxy resin according to the second aspect, and a modified product of the foregoing, and dispersing the mixture in an aqueous medium. In this case, the aqueous medium preferably contains an amine-modified epoxy resin and/or an amine-added epoxy resin and a curing agent, and the curing agent is preferably a blocked polyisocyanate compound.

In the aqueous resin dispersion of the present invention, the mixing ratio (mass ratio) of the epoxy resin component (including the modified epoxy resin and/or a modified product thereof and the amine-added epoxy resin) to the curing agent, that is, epoxy resin component/curing agent, is preferably from 1/99 to 99/1, more preferably from 30/70

to 90/10, and even more preferably from 40/60 to 85/15 in terms of solid content ratio.

The content of the one or more modified epoxy resins, selected from the modified epoxy resin according to the first aspect, the modified epoxy resin according to the second aspect, and a modified product of the foregoing, in the aqueous resin dispersion is, for example, 10 mass% or greater, preferably 50 mass% or greater, and for example, 100 mass% or less, preferably 90 mass% or less, based on the solid content.

The aqueous medium used in the aqueous resin dispersion of the present invention is a solvent containing water and/or a hydrophilic solvent as the main component (contained in an amount of 50 mass% or greater in the solvent). The aqueous medium used in the aqueous resin dispersion according to the present invention may also contain another solvent, such as an ester solvent, a ketone solvent, an amide solvent, an alcohol solvent, an ether alcohol solvent, or a mixture of the foregoing.

Specific examples of the hydrophilic solvent include one or more solvents selected from the group consisting of ethylene glycol, an ethylene glycol monoalkyl ether (e.g., methyl ether, ethyl ether, and butyl ether), diethylene glycol, a diethylene glycol monoalkyl ether (e.g., methyl ether, ethyl ether, and butyl ether), a glyme solvent (e.g., ethylene glycol dimethyl ether), diglyme solvents (e.g., diethylene glycol dimethyl ether), an alcohol solvent (e.g., methanol, ethanol, propanol, and n-butanol), propylene glycol, a propylene glycol monoalkyl ether (e.g., methyl ether, ethyl ether, and butyl ether), dipropylene glycol, and a dipropylene glycol monoalkyl ether (e.g., methyl ether, ethyl ether, and butyl ether).

In the aqueous resin dispersion of the present invention, an acid compound may be used to disperse the epoxy resin component, particularly the amine-modified epoxy resin and/or the amine-added epoxy resin. Any known acid compound can be used as the acid compound without limitation. Specific examples thereof include: inorganic acids, such as hydrochloric acid, nitric acid, phosphoric acid, and sulfamic acid; and organic acids, including carboxylic acid compounds such as formic acid, acetic acid, propionic acid, and lactic acid. These acid compounds may be used alone or in combination of two or more. Among them, an organic acid is preferable, and a carboxylic acid compound is more preferable.

In the aqueous resin dispersion, the neutralization equivalent of the resin component is, for example, preferably from 0.2 to 1.5 equivalents, more preferably from 0.5 to 1.0 equivalents, of the acid compound per 1 equivalent of amino groups.

The aqueous resin dispersion of the present invention may contain, as necessary, additives such as a neutralizing agent, an emulsifier, and a catalyst, and another resin component, in addition to the epoxy resin component other than that of the present invention, the curing agent, and the acid compound.

The amine-modified epoxy resin may be dispersed in the aqueous medium by adding the aqueous medium to the neutralized amine-modified epoxy resin under stirring, or by adding the neutralized amine-modified epoxy resin to the aqueous medium under stirring, or by mixing the aqueous medium and the neutralized amine-modified epoxy resin and then stirring the mixture.

The dispersion of the modified epoxy resin and the amine-added epoxy resin in the aqueous medium may be carried out by adding the aqueous medium to a resin solution containing the modified epoxy resin, the amine-added epoxy resin, and another resin component contained as necessary under stirring, or by adding the resin solution to the aqueous medium under stirring, or by mixing the aqueous medium and the resin solution and then stirring the mixture.

The dispersion temperature is preferably less than 100°C, more preferably from 40 to 99°C, even more preferably from 50 to 95°C. The resin solid content concentration of the resulting dispersion is preferably from 5 to 80 mass%, and more preferably from 10 to 50 mass%.

[Electrodeposition Coating Material]

The electrodeposition coating material of the present invention may be a cationic electrodeposition coating material or an anionic electrodeposition coating material as long as it contains the modified epoxy resin (including a modified product thereof) according to the first or second aspect of the present invention.

The cationic electrodeposition coating material preferably contains the modified epoxy resin of the present invention and/or a modified product thereof as a coating film-forming resin component. Also, the cationic electrodeposition coating material preferably contains the aqueous resin dispersion containing the modified epoxy resin of the present invention and/or a modified product thereof dispersed in an aqueous medium. Examples of a modified product of the modified epoxy resin include an amine-modified epoxy resin produced by reaction of the modified epoxy resin with an amine compound.

<Cationic Electrodeposition Coating Material>

The cationic electrodeposition coating material of the present invention contains, as a coating film-forming resin component, the modified epoxy resin of the present invention and/or an amine-modified epoxy resin produced by reaction

of the modified epoxy resin of the present invention with an amine compound, as well as a curing agent capable of undergoing a curing reaction with the foregoing. Further, the cationic electrodeposition coating material of the present invention may contain an amine-added epoxy resin other than that of the present invention. If necessary, the cationic electrodeposition coating material of the present invention may contain a resin, a curing catalyst, a pigment, a solvent such as water, and an additive (e.g., a surfactant, a surface conditioner, a curing co-catalyst, and a neutralizer).

Note that, when an amine compound is used as the polyfunctionalizing agent, which is used as a raw material for the modified epoxy resin of the present invention, the amine compound has already been introduced by the polyfunctionalizing agent, and thus it is not always necessary to react the modified epoxy resin with an amine compound.

The cationic electrodeposition coating material of the present invention may contain an aqueous resin dispersion in which the modified epoxy resin of the present invention, or an amine-modified epoxy resin produced by reacting the modified epoxy resin with an amine compound, is dispersed in an aqueous medium.

Examples of the cationic electrodeposition coating material of the present invention include a cationic electrodeposition coating material containing the amine-modified epoxy resin described in "Amine-Modified Epoxy Resin" above and a curing agent.

Examples of the cationic electrodeposition coating material of the present invention also include a single-layer cationic electrodeposition coating material containing the amine-modified epoxy resin described in "Amine-Modified Epoxy Resin" above and a curing agent.

The content of the epoxy resin containing the modified epoxy resin of the present invention (including amine-modified epoxy resin) and the amine-added epoxy resin other than that of the present invention and the content of the curing agent in the cationic electrodeposition coating material are preferably within the following ranges based on the resin solid content.

· Epoxy resin component containing the modified epoxy resin of the present invention (including amine-modified epoxy resin) and the amine-added epoxy resin: for example, 10 mass% or greater, preferably 20 mass% or greater, more preferably 30 mass% or greater, and even more preferably 40 mass% or greater, and for example, 99 mass% or less, preferably 95 mass% or less, more preferably 90 mass% or less, and even more preferably 80 mass% or less.
· Curing agent: for example, 1 mass% or greater, preferably 5 mass% or greater, more preferably 10 mass% or greater, and even more preferably 20 mass% or greater, and for example, 60 mass% or less, preferably 50 mass% or less, more preferably 45 mass% or less, and even more preferably 40 mass% or less.

<Amine-Added Epoxy Resin>

The amine-added epoxy resin is a non-polyfunctionalized epoxy resin other than the modified epoxy resin of the present invention, and can be produced by reacting at least the compound ($\alpha$) with an amine compound.

The compound ($\alpha$) used as a raw material for the amine-added epoxy resin is preferably a compound having two epoxy groups, and examples of commercially available products of the compound ($\alpha$) include those marketed by Mitsubishi Chemical Corporation under the trade names of jER828EL, jER1002, jER1004, andjER1007.

Moreover, the molecular weight can be increased by reacting the divalent phenolic compounds and the like listed as the compound ($\gamma$).

In the cationic electrodeposition coating material of the present invention, one or more types selected from the group consisting of acrylic resins, urethane resins, and melamine resins can be used as a coating film-forming resin component in addition to the modified epoxy resin, the amine-modified epoxy resin, and the amine-added epoxy resin.

The cationic electrodeposition coating material containing the amine-modified epoxy resin produced by reaction of the modified epoxy resin according to the second aspect of the present invention with an amine compound may be a cationic electrodeposition coating material containing the amine-modified epoxy resin (I), an amine-modified epoxy resin (II), which can be contained as necessary and produced by reaction of a non-polyfunctionalized epoxy resin with an amine compound, and a curing agent (particularly a blocked polyisocyanate compound).

The average polyfunctionalization degree (X2) of the amine-modified epoxy resin (I) represented by the following equation (3) is 0.1 or greater, preferably 0.30 or greater, more preferably 0.60 or greater, even more preferably 0.70 or greater, and particularly preferably 0.90 or greater. The upper limit value is not particularly limited, and may be set to preferably 15.00 or less, more preferably 13.00 or less, even more preferably 10.00 or less, and particularly preferably 8.00 or less.

Average Polyfunctionalization Degree (X2) = Number of Terminals in One Molecule of Amine-Modified Epoxy Resin (I) - 2    Equation (3):

The average polyfunctionalization concentration (Y2) of the amine-modified epoxy resin contained in the cationic

electrodeposition coating material represented by the following equation (4) is, for example, 0.1 (mmol/g) or greater, and preferably 0.4 (mmol/g) or greater. The upper limit value is not particularly limited and may be, for example, 5 (mmol/g) or less, preferably 3.0 (mmol/g) or less, and more preferably 2.0 (mmol/g) or less.

Note that, the average polyfunctionalization concentration (Y2) above is the average polyfunctionalization concentration (Y2) of all amine-modified epoxy resins contained in the cationic electrodeposition coating material.

Average Polyfunctionalization Cncentration (Y2) of Amine-Modified Epoxy Resin Contained in Cationic Electrodeposition Coating Material = Average Polyfunctionalization Degree (X2) of Amine-Modified Epoxy Resin (I) ÷ Weight-Average Molecular Weight Mw of Amine-Modified Epoxy Resin (I) × 100 × (Amount of Amine-Modified Epoxy Resin (I) ÷ Amount of All Amine-Modified Epoxy Resins) Equation (4):

Note that "all amine-modified epoxy resins" means resins that are a combination of the amine-modified epoxy resin (I) and the amine-modified epoxy resin (II).

Further, for the cationic electrodeposition coating material containing the epoxy resin according to the first aspect of the present invention and/or the epoxy resin according to the second aspect, the average polyfunctionalization concentration (Y3) of the epoxy resin contained in the cationic electrodeposition coating material represented by the following equation (5) is 0.1 (mmol/g) or greater (preferably within a range of from 0.1 to 5 mmol/g, more preferably within a range of from 0.4 to 3.0 mmol/g, still more preferably within a range of from 0.4 to 2.0 mmol/g).

Average Polyfunctionalization Cncentration (Y3) of Epoxy Resin Contained in CationicElectrodeposition Coating Material = Average Polyfunctionalization Degree (X1) of Modified Epoxy Resin ÷ Weight-Average Molecular Weight Mw of Modified Epoxy Resin×1000× (Amount ofModified Epoxy Resin÷ Amount of All Modified Epoxy Resins) Equation (5):

Note that, the average polyfunctionalization concentration (Y3) above is an average polyfunctionalization concentration of all epoxy resins (modified epoxy resin, amine-modified epoxy resin, amine-added epoxy resin, etc.) contained in the cationic electrodeposition coating material.

Note that, the "epoxy resins" includes resins produced by reaction of an epoxy compound (such as the compound ($\alpha$)) with another compound, and includes, for example, the modified epoxy resin, the amine-modified epoxy resin, and the amine-added epoxy resin.

(Curing Agent)

The curing agent contained in the cationic electrodeposition coating material of the present invention may be any known compound that reacts with an active hydrogen-containing group without limitation. Examples thereof include at least one type selected from blocked polyisocyanate compounds and amino resins, of which blocked polyisocyanate compounds are particularly preferred.

- Blocked Polyisocyanate Compound -

The blocked polyisocyanate compound is an addition reaction product of a polyisocyanate compound and a blocking agent. In addition, when necessary, the blocked polyisocyanate compound may be a reaction product of a blocking agent, an active hydrogen-containing compound other than the blocking agent, as well as a polyisocyanate compound.

The polyisocyanate compound may be a known polyisocyanate compound. For example, the polyisocyanate compound may be one or more types selected from the group consisting of aromatic, aliphatic, or alicyclic polyisocyanate compounds, such as tolylene diisocyanate, xylylene diisocyanate, phenylene diisocyanate, diphenylmethane-2,2'-diisocyanate, diphenylmethane-2,4'-diisocyanate, diphenylmethane-4,4'-diisocyanate, crude MDI [polymethylene polyphenylisocyanate],

polymeric MDI, crude TDI, bis(isocyanatomethyl)cyclohexane, tetramethylene diisocyanate, hexamethylene diisocyanate, methylene diisocyanate, and isophorone diisocyanate, as well as dimers, trimers, biurets, allophanates, uretdiones, uretonimines, isocyanurates, and oxadiazinetriones of these polyisocyanate compounds.

In particular, aromatic polyisocyanate compounds such as tolylene diisocyanate, xylylene diisocyanate, phenylene diisocyanate, diphenylmethane-2,4'-diisocyanate, diphenylmethane-4,4'-diisocyanate, and MDI (preferably crude MDI and the like) are more preferred because of corrosion resistance.

The blocking agent is added to the isocyanate groups of the polyisocyanate compound to block the isocyanate

groups. The blocked polyisocyanate compound produced by addition is stable at room temperature (20 ± 15°C), but it is desirable that the blocking agent dissociates to regenerate free isocyanate groups when the temperature is raised to the baking temperature of the coating film (for example, from approximately 80 to approximately 200°C).

The blocking agent may be, for example, one or more types selected from the group consisting of: oxime compounds, such as methyl ethyl ketoxime and cyclohexanone oxime; phenolic compounds, such as phenol, para-t-butylphenol, and cresol; alcohol compounds, such as n-butanol, 2-ethylhexanol, phenylcarbinol, methylphenylcarbinol, ethylene glycol monomethyl ether, ethylene glycol monoethyl ether, ethylene glycol monobutyl ether, diethylene glycol monoethyl ether, ethylene glycol, propylene glycol, propylene glycol monomethyl ether, and methoxymethanol; lactam compounds, such as ε-caprolactam and γ-butyrolactam; active methylene compounds, such as dimethyl malonate, diethyl malonate, diisopropyl malonate, ethyl acetoacetate, isopropyl acetoacetate, methyl acetoacetate, isopropyl acetoacetate, and acetylacetone; pyrazole compounds, such as pyrazole, 3,5-dimethylpyrazole, 3-methylpyrazole, 4-bromo-3,5-dimethylpyrazole, 4-nitro-3,5-dimethylpyrazole, 4-benzyl-3,5-dimethylpyrazole, methyl-5-methylpyrazole-3-carboxylate, 3-methyl-5-phenylpyrazole, and 3,5-dimethylpyrazole-4-carboxyanilide; mercaptan compounds, such as butyl mercaptan, t-butyl mercaptan, hexyl mercaptan, t-dodecyl mercaptan, 2-mercaptobenzothiazole, thiophenol, methylthiophenol, and ethylthiophenol; acid amide compounds, such as acetanilide, acetanisidide, acetotoluide, acrylamide, methacrylamide, acetamide, stearamide, and benzamide; imide compounds, such as succinimide, phthalimide, and maleimide; amine compounds, such as diphenylamine, phenylnaphthylamine, xylidine, N-phenylxylidine, carbazole, aniline, naphthylamine, butylamine, dibutylamine, and butylphenylamine; imidazole compounds, such as imidazole and 2-ethylimidazole; urea compounds, such as urea, thiourea, ethyleneurea, ethylenethiourea, and diphenylurea; carbamate compounds; such as phenyl N-phenylcarbamate; imine compounds, such as ethyleneimine and propyleneimine; and sulfite compounds, such as sodium bisulfite and potassium bisulfite.

Among them, the blocking agent is preferably at least one type selected from the group consisting of a pyrazole compound, an active methylene compound, an oxime compound, a phenolic compound, a lactam compound, and an alcohol compound.

- Amino Resin -

The amino resin may be a known amino resin. For example, the amino resin may be one or more types selected from the group consisting of: various alkylol group-containing amino resins (e.g., melamine resins, benzoguanamine resins, and urea resins) produced by reacting an amino group-containing compound such as melamine, benzoguanamine, acetoguanamine, or urea with an aldehyde compound (or an aldehyde supplier) such as formaldehyde or acetaldehyde; and various alkoxyalkyl group-containing amino resins produced by reacting the alkylol group-containing amino resins with a lower alcohol such as methanol, ethanol, n-butanol, or i-butanol (isobutanol).

(Curing Catalyst)

The cationic electrodeposition coating material of the present invention may contain a curing catalyst for accelerating the curing reaction between at least some of the coating film-forming resin components and the curing agent. The curing catalyst is not particularly limited, and examples thereof include one or more types selected from the group consisting of a bismuth compound, a zinc compound, a tin compound, a titanium compound, a zirconium compound, an yttrium compound, a phosphazene compound, an amine compound, and a quaternary salt compound. For example, a bismuth compound can be used, and one or more curing catalysts may be used in addition to the bismuth compound. For example, the one or more curing catalysts are selected from the group consisting of inorganic compounds such as zinc compounds, tin compounds, titanium compounds, zirconium compounds, and yttrium compounds; organic compounds such as phosphazene compounds, amine compounds, and quaternary salt compounds; and composites thereof.

Note that, although an organotin compound such as dibutyltin dibenzoate, dioctyltin oxide, or dibutyltin oxide can be used as a curing catalyst for the purpose of improving the curability of the coating film, it is preferable not to use an organotin compound in view of recent environmental regulations regarding organotin compounds.

From the viewpoint of environmental considerations, it is more preferable to use, as a substitute catalyst for organotin compounds, one or more curing catalysts selected from the group consisting of a bismuth compound, or a bismuth compound and an inorganic compound such as a zinc compound, a titanium compound, a zirconium compound, or a yttrium compound; an organic compound such as a phosphazene compound, an amine compound, and a quaternary salt compound; and composites of these compounds, or it is more preferable to substantially use no curing catalyst.

The cationic electrodeposition coating material of the present invention preferably contains a bismuth compound as a curing catalyst from an environmental and safety standpoint.

The bismuth compound may be one or more types selected from the group consisting of: inorganic bismuth compounds, such as metallic bismuth, bismuth chloride, bismuth oxychloride, bismuth bromide, bismuth oxide, bismuth hydroxide, bismuth nitrate, bismuth nitrite, bismuth silicate, bismuth aluminosilicate, bismuth aluminate, bismuth borate,

bismuth phosphate, bismuth carbonate, and bismuth oxycarbonate; and organic bismuth compounds, such as bismuth formate, bismuth acetate, bismuth salicylate, bismuth citrate, bismuth benzoate, bismuth gallate, bismuth oxalate, bismuth lactate, bismuth oleate, bismuth methoxyacetate, bismuth dimethylolpropionate, bismuth dialkyldithiocarbamate, bismuth toluenesulfonate, and triphenylbismuth.

The blending ratio of the bismuth compound in the cationic electrodeposition coating material of the present invention is from 0.1 to 10 parts by mass and preferably from 0.5 to 6 parts by mass per 100 parts by mass of the resin solid content.

(Pigment)

The cationic electrodeposition coating material of the present invention may contain a pigment. Examples of the pigment include one or more types selected from the group consisting of color pigments, anticorrosive pigments, and extender pigments.

These pigments are preferably mixed into the coating material as a pigment-dispersed paste. For example, a pigment-dispersed paste prepared by mixing an additive such as a resin for pigment dispersion, a pigment, and a neutralizer, and dispersing the mixture in a dispersion mixer, such as a ball mill, a sand mill, or a pebble mill, can be used in the cationic electrodeposition coating material.

Any known pigment may be used as the pigment without limitation. For example, the pigment may be one or more types selected from the group consisting of color pigments such as titanium oxide, carbon black, and colcothar; extender pigments such as clay, mica, baryta, calcium carbonate, and silica; metal compounds having functions of an anticorrosive pigment, such as zinc phosphate, iron phosphate, aluminum phosphate, calcium phosphate, zinc phosphite, zinc cyanide, zinc oxide, aluminum tripolyphosphate, zinc molybdate, aluminum molybdate, calcium molybdate, aluminum phosphomolybdate, and aluminum zinc phosphomolybdate.

In the present invention, when silica is used, the amount thereof is less than 5 mass%.

The resin for pigment dispersion which may be blended in the pigment-dispersed paste is not particularly limited. For example, the resin for pigment dispersion may be one or more types selected from the group consisting of an epoxy resin having a hydroxyl group and a cationic group, an acrylic resin having a hydroxyl group and a cationic group, a tertiary amine epoxy resin, a quaternary ammonium salt epoxy resin, a tertiary sulfonium salt epoxy resin, a tertiary amine acrylic resin, a quaternary ammonium salt acrylic resin, and a tertiary sulfonium salt acrylic resin.

The blending amount of the pigment is preferably in the range of from 1 to 100 parts by mass, particularly preferably from 10 to 50 parts by mass, per 100 parts by mass of the resin solid content of the cationic electrodeposition coating material.

The cationic electrodeposition coating material of the present invention includes, for example, an amine-modified epoxy resin and a curing agent. The amine-modified epoxy resin is produced by reacting at least a compound having one or more epoxy groups with a polyfunctionalizing agent containing a compound (A) having "a" primary amino groups, "b" secondary amino groups, "c" alcoholic hydroxyl groups, "e" carboxyl groups, "f" mercapto groups, "g" sulfonate groups, "h" carboxylic anhydride groups, and "i" epoxy groups, where a, b, c, e, f, g, and h are each independently an integer of 0 or greater, i is an integer of 0 or 3 or greater, $2a + b + c + e + f + g + 2h + i \geq 3$, and, when b = 1, $a \neq 1$, $+ c \neq 2$, ore $+ f+g + 2h + i \geq 1$.

(Single-Layer Cationic Electrodeposition Coating Material)

The cationic electrodeposition coating material of the present invention is preferably a single-layer cationic electrodeposition coating material. The single-layer cationic electrodeposition coating material is a coating material that forms, when subjected to cationic electrodeposition coating as well as heat curing, a single-layer coating film whose components in the thickness direction are substantially uniform.

For example, the single-layer cationic electrodeposition coating material of the present invention forms a coating film when subjected to electrodeposition coating, and the cross section of the coating film formed is not separated into two layers (or multiple layers) when observed under a microscope. Even if there is some unevenness of a pigment component, a resin component, or the like, the coating film is a single layer as long as no interlayer boundaries appear during the observation of cross section.

Furthermore, the single-layer cationic electrodeposition coating material of the present invention is, for example, a cationic electrodeposition coating material that does not form, when subjected to a one-time electrodeposition coating, a multilayer film having a concentration gradient such that a corrosion-resistant resin (epoxy resin) is mainly distributed in the lower layer portion (metal substrate surface side, hereinafter the same) and a resin other than the epoxy resin is mainly distributed in the upper layer portion.

(Method of Producing Cationic Electrodeposition Coating Material)

The cationic electrodeposition coating material of the present invention is not particularly limited as long as it is a production method capable of making a cationic electrodeposition coating material containing the modified epoxy resin according to the present invention or a modified product thereof, or a production method capable of making a cationic electrodeposition coating material containing the amine-modified epoxy resin of the present invention.

Examples of a method of producing the cationic electrodeposition coating material include producing an amine-modified epoxy resin by reacting an amine compound with a modified epoxy resin, described in the modified epoxy resin according to the second aspect, that is produced by reacting at least a compound (α) having one or more epoxy groups and a compound (β) having a total functionality of 3 or greater, and mixing at least the amine-modified epoxy resin and a curing agent to produce the cationic electrodeposition coating material. Another example is a method of producing a cationic electrodeposition coating material by mixing a pigment paste described below with other components.

In the method of producing the cationic electrodeposition coating material of the present invention, the produced cationic electrodeposition coating material is preferably a single-layer cationic electrodeposition coating material.

(Cationic Electrodeposition Coating Method and Coated Article)

The cationic electrodeposition coating method using the cationic electrodeposition coating material of the present invention includes immersing an object to be coated in an electrodeposition bath of the cationic electrodeposition coating material, and applying electricity with the object to be coated serving as the cathode.

A coated article fought with the cationic electrodeposition coating material of the present invention can be produced by immersing an object to be coated in an electrodeposition coating material bath containing the cationic electrodeposition coating material, and then carrying out electrodeposition coating.

The object to be coated is not particularly limited as long as it contains a metal. Examples of the object to be coated with the cationic electrodeposition coating material include automobile bodies, automobile parts, two-wheeled vehicle parts, household appliances, and other appliances.

Examples of a metal sheet serving as the object to be coated include a cold-rolled steel sheet, a hot-dip galvanized steel sheet, an electrogalvanized steel sheet, an electrogalvanized-iron double-layered steel sheet, an organic composite plated steel sheet, an Al material, a Mg material, and products obtained by cleaning the surfaces of these metal sheets by alkaline degreasing or the like as needed and then performing a surface treatment such as phosphate chemical conversion treatment, chromate treatment, or composite oxide treatment.

The cationic electrodeposition coating method is carried out as follows, for example. A cationic electrodeposition coating material diluted with deionized water or the like to a solid concentration of approximately from 5 to 40 mass%, preferably from 10 to 25 mass%, and adjusted to a pH of from 4.0 to 9.0, preferably from 5.5 to 7.0 is used as a bath. The bath temperature is typically adjusted to from 15 to 35°C, and electricity is applied at a load voltage of from 100 to 400 V, preferably from 150 to 350 V, using the object to be coated as the cathode. After cationic electrodeposition coating, the object to be coated is usually washed thoroughly with ultrafiltrate (UF filtrate), reverse osmosis permeated water (RO water), industrial water, pure water, or the like in order to remove excessive cationic electrodeposition coating material adhering to the object coated.

The thickness of a cationic electrodeposition coating film is not particularly limited, and may be generally within a range of from 5 to 40 μm, preferably from 10 to 30 μm when dried. Bake drying of the electrodeposition coating film is performed using a drying device such as an electric hot-air dryer or a gas hot-air dryer. In general, the temperature of the surface of the coated article during bake drying is higher than 160°C and lower than 200°C, but in the present invention, the temperature is preferably lower than 160°C, more preferably from 80 to 130°C, and particularly preferably from 100 to 130°C, from the viewpoint of energy cost reduction. The duration of baking is from 10 to 180 minutes, and preferably from 20 to 50 minutes. The bake drying above allows for the formation of a cured coating film.

Examples

Hereinafter, the present invention will be described in more detail with reference to Examples below, but the present invention is not limited to Examples. Note that, unless otherwise specified, "%" means "mass%" and "parts" means "parts by mass".

[Components Used]

The epoxy compound and polyfunctionalizing agents used in Examples are as follows.

<Epoxy Compound>

· Bisphenol A epoxy resin: trade name jER828EL, available from Mitsubishi Chemical Corporation (number of functional groups: 2, epoxy equivalent: 187, weight-average molecular weight: 375)

<Polyfunctionalizing Agent>

· Polyfunctionalizing agent 1: polyamidoamine (mixture, details given in Table 1 below)
· Polyfunctionalizing agent 2: ethylenediamine (molecular weight: 60, number of functional groups: 4)
· Polyfunctionalizing agent 3: dimer acid (mixture, details given in Table 1 below)
· Polyfunctionalizing agent 4: trimellitic acid (molecular weight: 210, number of functional groups: 3)
· Polyfunctionalizing agent 5: diethanolamine (molecular weight: 105, number of functional groups: 3)
· Polyfunctionalizing agent 6: 3,5-diaminobenzoic acid (molecular weight: 152, number of functional groups: 3)

· Polyfunctionalizing agent 7: a compound represented by the following structural formula (molecular weight: 592, number of functional groups: 3)

[Chem. 10]

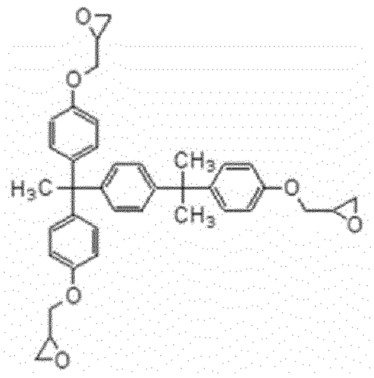

· Polyfunctionalizing agent 8: a compound represented by the following structural formula (mixture, details given in Table 1 below)

[Chem. 11]

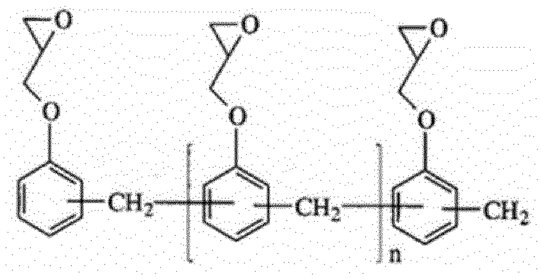

where n is an integer of 0 or greater.

[Table 1]

| | | Mass Ratio (%) | Molecular Weight | Average Number of Functional Groups |
|---|---|---|---|---|
| Polyfunctionalizing Agent 1 | Bifunctional Component | 70 | 300 | 2 |
| | Trifunctional or Higher Functional Component | 30 | 600 | 3 |
| Polyfunctionalizing Agent 3 | Bifunctional Component | 20 | 560 | 2 |
| | Trifunctional or Higher Functional Component | 80 | 840 | 3 |
| Polyfunctionalizing Agent 8 | Bifunctional Component | 20 | 312 | 2 |
| | Trifunctional or Higher Functional Component | 80 | 637 | 4 |

In each of the polyfunctionalizing agents 1, 3, and 8, a bifunctional component and a trifunctional or higher functional component were mixed.

A trifunctional or higher functional component is a polyfunctional component.

· Polyfunctionalizing agent 9: a mixture of compounds represented by the structural formula below, where p = q = r = 0, $R_1 = R_2 = R_3 = H$, and n is 1 or greater. The content ratios of the compounds with different values of n relative to the total amount of the compounds are presented in Table 2. The average number of functional groups is 8.4, and the weight-average molecular weight is 878.

[Chem. 12]

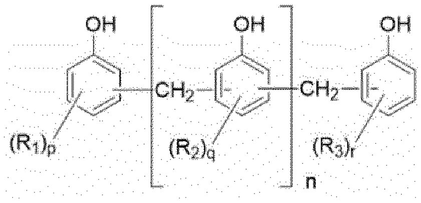

[Table 2]

| Value of n in Formula | Number of Functional Groups | Molecular Weight | Content Ratio (mass%) |
|---|---|---|---|
| n = 1 | 3 | 306 | 3.1 |
| n = 2 | 4 | 412 | 4.2 |
| n = 3 | 5 | 518 | 5.3 |
| n = 4 | 6 | 624 | 6.3 |
| n = 5 | 7 | 730 | 7.7 |
| n = 6 | 8 | 836 | 7.9 |
| n = 7 | 9 | 942 | 8.9 |
| n = 8 | 10 | 1048 | 10.6 |
| n = 9 | 11 | 1154 | 11.0 |
| n = 10 | 12 | 1260 | 8.5 |
| n = 11 | 13 | 1366 | 7.7 |
| n = 12 | 14 | 1472 | 6.1 |
| n = 13 | 15 | 1578 | 5.4 |

(continued)

| Value of n in Formula | Number of Functional Groups | Molecular Weight | Content Ratio (mass%) |
|---|---|---|---|
| n = 14 | 16 | 1684 | 3.1 |
| n = 15 | 17 | 1790 | 2.7 |
| n = 16 | 18 | 1896 | 1.5 |
| Total | | | 100.0 |

[Evaluation]

The surface finish, corrosion resistance (salt spray), corrosion resistance (salt immersion) and oil crawling resistance of the electrodeposition coating film were evaluated as follows. A coating film (coating material) with even one rating of "C" was deemed as unacceptable.

<Surface Finish>

A cold-rolled steel sheet (0.8 mm × 150 mm × 70 mm) treated with zinc phosphate was subjected to electrodeposition coating at a bath temperature of 28°C and a load voltage at which the thickness of the cured coating film would be from 18 to 19 μm, and the coating film was heated and cured at 170°C for 20 minutes to produce a test sheet. Subsequently, the surface roughness value (Ra) as defined in JIS B 601 of the coated surface of the test sheet was measured with a cutoff of 0.8 mm using SURFTEST 301 (trade name, surface roughness tester, available from Mitutoyo Corporation) and evaluated according to the following criteria. S is the best rating, and C is unacceptable.

S: The surface roughness value (Ra) is less than 0.15.
A: The surface roughness value (Ra) is 0.15 or greater and less than 0.25.
B1: The surface roughness value (Ra) is 0.25 or greater and less than 0.35.
B2: The surface roughness value (Ra) is 0.35 or greater and less than 0.45.
C: The surface roughness value (Ra) is 0.45 or greater.

<Corrosion Resistance (Salt Spray)>

A cold-rolled steel sheet (0.8 mm × 150 mm × 70 mm) treated with zinc phosphate was subjected to electrodeposition coating at a bath temperature of 28°C and a load voltage at which the thickness of the cured coating film would be from 18 to 19 μm, and the coating film was heated and cured at 170°C for 20 minutes to produce a test sheet. Subsequently, the coating film was cross-cut with a cutter knife such that the cutter knife reached the substrate of the test sheet, and the coating film with cross-cut was subjected to a salt spray test at 35°C for 840 hours in accordance with JIS Z-2371. Then, evaluation was performed based on rust and blister widths on one side of the cut portion according to the following evaluation criteria. S is the best rating, and C is unacceptable.

S: The maximum width of rust and blisters is 2.0 mm or less on one side of the cut portion; very high corrosion resistance.
A: The maximum width of rust and blisters is more than 2.0 mm and 3.0 mm or less on one side of the cut portion; good corrosion resistance.
B: The maximum width of rust and blisters is more than 3.0 mm and 4.0 mm or less on one side of the cut portion; standard corrosion resistance.
C: The maximum width of rust and blisters is more than 4.0 mm on one side of the cut portion; poor corrosion resistance.

<Corrosion Resistance (Salt Immersion)>

A cold-rolled steel sheet (0.8 mm × 150 mm × 70 mm) treated with zinc phosphate was subjected to electrodeposition coating at a bath temperature of 28°C and a load voltage at which the thickness of the cured coating film would be from 18 to 19 μm, and the coating film was heated and cured at 170°C for 20 minutes to produce a test sheet. Subsequently, the test sheet was immersed in 50°C salt water with a concentration of 5 wt.% for 600 hours. Then, the test sheet was pulled up, and water on the coating film surface was wiped off. Cellophane adhesive tape was then adhered to the coating film surface, and the tape was quickly peeled off. The percentage (%) of the coating film peeled

off was evaluated by this peeling test. S is the best rating, and C is unacceptable.

S: The percentage of the coating film peeled off to the test coating film portion is less than 5%.
A: The percentage of the coating film peeled off to the test coating film portion is 5% or greater and less than 10%.
B: The percentage of the coating film peeled off to the test coating film portion is 10% or greater and less than 20%.
C: The percentage of the coating film peeled off to the test coating film portion is 20% or greater.

<Oil Crawling Resistance>

A cold-rolled steel sheet (0.8 mm × 150 mm × 70 mm) treated with zinc phosphate was subjected to electrodeposition coating at a bath temperature of 28°C and a load voltage at which the thickness of the cured coating film would be from 18 to 19 μm to produce a wet film.

The wet film was washed with water and left to stand for 30 minutes. Then, 0.2 ml of anti-rust machine oil (available from Nihon Parkerizing Co., Ltd., trade name: NOX-RUST320) was evenly scattered and adhered to the wet film in a baking process. After cooling, the coating film surface was visually observed, and the number and size of crawlings were counted and evaluated according to the following evaluation criteria. S is the best rating, and C is unacceptable.

S: No craters occurred on the coating film surface.
A: Less than ten craters occurred on the coating film surface.
B: Ten or more craters (each having a diameter of less than 3 mm) occurred on the coating film surface.
C: Ten or more craters (one or more of which having a diameter of 3 mm or greater) occurred on the coating film surface.

[Amine-Modified Epoxy Resin A]

<Example 1-1>

To a reaction vessel equipped with a stirrer, a thermometer, a nitrogen inlet tube, and a reflux condenser, 378 parts of bisphenol A, 1054 parts of a bisphenol A epoxy resin (epoxy compound), 21 parts of a polyfunctionalizing agent 4, 1.0 parts of TBAB (tetrabutylammonium bromide; catalyst), and methyl isobutyl ketone (solvent) in an amount of 10% of the total mass of the bisphenol A epoxy resin, bisphenol A, and the polyfunctionalizing agent were added, and the mixture was reacted at 160°C until the epoxy equivalent reached 727. The resulting reaction product was then diluted with methyl isobutyl ketone to a solid content of 80%.

Then, 179 parts of diethanolamine and 89 parts of a ketiminated product (90% product) of diethylenetriamine and methyl isobutyl ketone were added, and the mixture was reacted at 120°C for 4 hours. Further, methyl isobutyl ketone was added to produce a solution of a polyfunctional amine-modified epoxy resin (A1) having an amino group with a solid content of 75%.

The resulting epoxy resin (A1) had an amine value of 77.6 mg KOH/g, an average polyfunctionalization degree (X1) of 0.10, and an average polyfunctionalization concentration (Y1) of 0.06.

<Examples 1-2 to 1-12 and Comparative Example 1-1>

Amine-modified epoxy resin solutions A2 to A13 were produced in the same manner as in Example 1-1 except that the formulations presented in Table 3 below were used.

[Table 3]

| Examples and Comparative Example | | Example 1-1 | Example 1-2 | Example 1-3 | Example 1-4 | Example 1-5 | Example 1-6 | Example 1-7 | Example 1-8 | Example 1-9 | Example 1-10 | Example 1-11 | Example 1-12 | Comparative Example 1-1 |
|---|---|---|---|---|---|---|---|---|---|---|---|---|---|---|
| Name of Amine-Modified Epoxy Resin | | A1 | A2 | A3 | A4 | A5 | A6 | A7 | A8 | A9 | A10 | A11 | A12 | A13 |
| Bisphenol A | | 378 | 3319 | 95 | 114 | 171 | 85 | 68 | 57 | 114 | 57 | 1026 | 858 | 0 |
| Bisphenol A Epoxy Compound | | 1054 | 188 | 1688 | 2063 | 1500 | 2063 | 2738 | 750 | 1688 | 938 | 375 | 375 | 375 |
| Polyfunctionalizing Agent | Polyfunctionalizing Agent 1 | 0 | 0 | 700 | 0 | 0 | 0 | 0 | 0 | 0 | 0 | 0 | 0 | 0 |
| | | 0 | 0 | 300 | 0 | 0 | 0 | 0 | 0 | 0 | 0 | 0 | 0 | 0 |
| | Polyfunctionalizing Agent 2 | 0 | 0 | 0 | 120 | 0 | 0 | 0 | 0 | 0 | 0 | 0 | 0 | 0 |
| | Polyfunctionalizing Agent 3 | 0 | 0 | 0 | 0 | 252 | 462 | 672 | 0 | 0 | 0 | 0 | 0 | 0 |
| | | 0 | 0 | 0 | 0 | 1008 | 1848 | 2688 | 0 | 0 | 0 | 0 | 0 | 0 |
| | Polyfunctionalizing Agent 4 | 21 | 0 | 0 | 0 | 0 | 0 | 0 | 105 | 0 | 0 | 0 | 0 | 0 |
| | Polyfunctionalizing Agent 5 | 0 | 0 | 0 | 0 | 0 | 0 | 0 | 0 | 210 | 0 | 0 | 0 | 0 |
| | Polyfunctionalizing Agent 6 | 0 | 0 | 0 | 0 | 0 | 0 | 0 | 0 | 0 | 76 | 0 | 0 | 0 |
| | Polyfunctionalizing Agent 7 | 0 | 0 | 0 | 0 | 0 | 0 | 0 | 0 | 0 | 0 | 1776 | 0 | 0 |
| | Polyfunctionalizing Agent 8 | 0 | 955 | 0 | 0 | 0 | 0 | 0 | 0 | 0 | 0 | 0 | 239 | 0 |
| | | 0 | 3820 | 0 | 0 | 0 | 0 | 0 | 0 | 0 | 0 | 0 | 955 | 0 |
| (Epoxy Equivalent Before Addition of Amine) | | 727 | 4141 | 1391 | 1148 | 1466 | 2229 | 3083 | 456 | 1006 | 535 | 1589 | 1214 | 188 |
| Addition of Amine | Diethanolamine | 179 | 179 | 179 | 179 | 179 | 179 | 179 | 179 | 179 | 179 | 179 | 179 | 179 |
| | Ketiminated Product (90% Product) of Diethylenetriamine | 89 | 89 | 89 | 89 | 89 | 89 | 89 | 89 | 89 | 89 | 89 | 89 | 89 |
| Characteristic Value | Average Polyfunctionalization Degree (X1) | 0.10 | 12.00 | 0.50 | 4.00 | 1.20 | 2.20 | 3.20 | 0.50 | 2.00 | 1.50 | 3.00 | 3.00 | 0.00 |
| | Average Polyfunctionalization Concentration (Y1) | 0.06 | 1.41 | 0.17 | 1.60 | 0.38 | 0.47 | 0.50 | 0.45 | 0.90 | 1.17 | 0.89 | 1.14 | 0.00 |
| | Amine Value (mg KOH/g) | 77.6 | 15.2 | 96.3 | 141.0 | 41.1 | 27.6 | 20.2 | 115.1 | 108.6 | 144.6 | 38.1 | 48.9 | 220.8 |

Note that, the calculation of amine values in the above table did not take into account the amine of the polyfunctionalizing agent.

[Cationic Electrodeposition Coating Material X]

<Production of Resin for Pigment Dispersion (R)>

In a flask equipped with a stirrer, a thermometer, a dropping funnel, and a reflux condenser, in 1010 parts of a bisphenol A epoxy resin (epoxy equivalent: 190, weight-average molecular weight: 350), 390 parts of bisphenol A, 240 parts of Placcel 212 (available from Daicel Chemical Industries, Ltd., trade name: polycaprolactone diol, weight-average molecular weight: approximately 1250), and 0.2 part of dimethylbenzylamine were added, and the mixture was reacted at 130°C until the epoxy equivalent reached approximately 1090. Next, 134 parts of dimethylethanolamine and 150 parts of an aqueous lactic acid solution with a concentration of 90% were added, and the mixture was reacted at 90°C until epoxy groups disappeared. Subsequently, propylene glycol monomethyl ether was added to adjust the solid content to produce a resin for pigment dispersion (R) containing a quaternary ammonium base and having a solid content of 60%.

<Production of Pigment-Dispersed Paste (P1)>

8.3 parts (solid content: 5 parts) of the resin for pigment dispersion (R) containing a quaternary ammonium base and having a solid content of 60%, 14 parts of titanium dioxide, 6.0 parts of purified clay, 0.3 parts of carbon black, 3.5 parts of bismuth hydroxide, and 20.3 parts of deionized water were added to a ball mill and dispersed for 20 hours, to produce a pigment-dispersed paste (P1) having a solid content of 55%.

<Production of Blocked Polyisocyanate Compound (BNCO (B1))>

270 parts of Cosmonate M-200 (available from Mitsui Chemicals, Inc., trade name: crude MDI, NCO group content: 31.3%) and 127 parts of methyl isobutyl ketone were placed in a reaction vessel, and the temperature was raised to 70°C. Into the resulting product, 236 parts of ethylene glycol monobutyl ether was added dropwise over 1 hour, and then the temperature was raised to 100°C. While maintaining this temperature, sampling was carried out over time to confirm the stopping of absorption of unreacted isocyanate groups by infrared absorption spectrometry, thereby resulting in a blocked polyisocyanate compound (BNCO (B1)) having a resin solid content of 80%.

<Example 2-1>

100 parts (solid content) of the amine-modified epoxy resin (A-1) obtained in Example 1-1 and 45 parts (solid content) of the blocked polyisocyanate compound (BNCO) (B1) were mixed, and 13 parts of 10% acetic acid was added to the mixture and evenly stirred. After that, deionized water was added dropwise with vigorous stirring over approximately 15 minutes, to produce an emulsion having a solid content of 34%.

Next, 294 parts of the emulsion (having a solid content of 100 parts), 52.4 parts of the pigment-dispersed paste (P1), and deionized water were added, to produce a cationic electrodeposition coating material (X1) having a solid content of 20%. The average polyfunctionalization concentration (Y2) of the cationic electrodeposition coating material (X1) is presented in Table 3 below.

Electrodeposition coating was performed using the resulting cationic electrodeposition coating material, and heat curing was carried out to produce an electrodeposition coating film. The surface finish, corrosion resistance (salt spray), corrosion resistance (salt immersion), and oil crawling resistance of the resulting electrodeposition coating film were evaluated. The results are collectively presented in Table 3.

<Examples 2-2 to 2-18 and Comparative Example 2-1>

Cationic electrodeposition coating materials X2 to X19 each having a solid content of 20% were produced in the same manner as in Example 2-1 except that the amine-modified epoxy resins presented in Table 4 were used. Note that, for example, Example 2-13 is an example in which 30 parts of A6 and 70 parts of A13 were used as the amine-modified epoxy resin, and the average polyfunctionalization concentration (Y2) was the average of a mixture of two types of amine-modified epoxy resins, with the unit being mmol/g.

Electrodeposition coating was performed using the resulting cationic electrodeposition coating material, and heat curing was carried out to produce an electrodeposition coating film.

An observation of the cross sections of the electrodeposition coating films revealed that they were all single-layer coating films (with no boundaries).

The surface finish, corrosion resistance (salt spray), corrosion resistance (salt immersion), and oil crawling resistance of the resulting electrodeposition coating films were evaluated. The results are collectively presented in Table 4.

In the present invention, coating films with even one rating of "C" in the four evaluations are deemed as unacceptable.

Note that, the values of resin contents in the tables are all in terms of solid content.

[Table 4]

| Examples and Comparative Example | Example 2-1 | Example 2-2 | Example 2-3 | Example 2-4 | Example 2-5 | Example 2-6 | Example 2-7 | Example 2-8 | Example 2-9 | Example 2-10 | Example 2-11 | Example 2-12 |
|---|---|---|---|---|---|---|---|---|---|---|---|---|
| Name of Cationic Electrodeposition Coating Material | X1 | X2 | X3 | X4 | X5 | X6 | X7 | X8 | X9 | X10 | X11 | X12 |
| Epoxy Resin: Type | A1 | A2 | A3 | A4 | A5 | A6 | A7 | A8 | A9 | A10 | A11 | A12 |
| Epoxy Resin: Blending Amount | 100 | 100 | 100 | 100 | 100 | 100 | 100 | 100 | 100 | 100 | 100 | 100 |
| Average Polyfunctionalization Concentration (Y2) | 0.06 | 1.41 | 0.17 | 1.60 | 0.38 | 0.47 | 0.50 | 0.45 | 0.90 | 1.17 | 0.89 | 1.14 |
| Surface Finish | S | B2 | S | A | S | S | S | S | S | S | S | S |
| Corrosion Resistance (Salt Spray) | A | S | S | S | S | S | S | S | S | S | S | S |
| Corrosion Resistance (Salt Immersion) | B | S | A | S | S | S | S | S | S | S | S | S |
| Oil Crawling Resistance | B | S | B | S | A | S | S | A | S | S | S | S |

| Examples and Comparative Example | Example 2-13 | | Example 2-14 | | Example 2-15 | | Example 2-16 | | Example 2-17 | | Example 2-18 | | Comparative Example 2-1 |
|---|---|---|---|---|---|---|---|---|---|---|---|---|---|
| Name of Cationic Electrodeposition Coating Material | X13 | | X14 | | X15 | | X16 | | X17 | | X18 | | X19 |
| Epoxy Resin: Type | A6 | A13 | A6 | A13 | A10 | A13 | A10 | A13 | A11 | A13 | A11 | A13 | A13 |
| Epoxy Resin: Blending Amount | 30 | 70 | 70 | 30 | 30 | 70 | 70 | 30 | 30 | 70 | 70 | 30 | 100 |
| Average Polyfunctionalization Concentration (Y2) | 0.14 | | 0.33 | | 0.35 | | 0.82 | | 0.33 | | 0.78 | | 0.00 |
| Surface Finish | S | | S | | S | | S | | S | | S | | S |
| Corrosion Resistance (Salt Spray) | S | | S | | S | | S | | S | | S | | A |
| Corrosion Resistance (Salt Immersion) | A | | S | | S | | S | | S | | S | | C |
| Oil Crawling Resistance | B | | A | | A | | S | | A | | S | | C |

[Production of Epoxy Resin]

<Production Example 1>

To a reaction vessel equipped with a stirrer, a thermometer, a nitrogen inlet tube, and a reflux condenser, 1140 parts of jER828EL (trade name, available from Mitsubishi Chemical Corporation, epoxy resin, epoxy equivalent: 190, number-average molecular weight: 380), 456 parts of bisphenol A, 1.1 parts of TBAB (tetrabutylammonium bromide; catalyst), and 200 parts of methyl isobutyl ketone (solvent) were added, and the mixture was reacted at 160°C until the epoxy equivalent reached approximately 800. The resulting reaction product was then diluted with methyl isobutyl ketone until the solid content reached 80%.

Then, 178 parts of a diketiminated product of diethylenetriamine (90% product) and 137 parts of diethanolamine were added and reacted at 120°C for 4 hours. Further, methyl isobutyl ketone was added to produce a solution of a non-polyfunctional linear amine-added epoxy resin (C0) having an amino group with a solid content of 75%.

The resulting amine-added epoxy resin (C0) had a number-average molecular weight of approximately 1900, an amine value of 92 mg KOH/g, an average polyfunctionalization degree (X1) of 0, and an average polyfunctionalization concentration (Y1) of 0.

<Production Example 2>

228 parts of bisphenol A and 0.6 parts of potassium hydroxide was placed in an autoclave, and the reaction vessel was purged with nitrogen. Then, 44 parts of ethylene oxide was added to the reaction vessel, and the temperature was slowly raised to approximately 160°C. After completion of the reaction, the mixture was cooled and neutralized with concentrated sulfuric acid. Then, ethylene glycol monobutyl ether was added thereinto to produce a solution of a compound (Z) having a solid content of 80%, which corresponded to the compound (γ1-1-1) in the specification.

[Production of Modified Epoxy Resin]

<Example 3-1>

To a reaction vessel equipped with a stirrer, a thermometer, a nitrogen inlet tube, and a reflux condenser, 1914 parts of a bisphenol A epoxy resin (epoxy compound, molecular weight: 375), 610 parts of bisphenol A, 3.8 parts of dimethylbenzylamine (catalyst), and 280.4 parts of methyl isobutyl ketone (solvent) were added, and the mixture was

reacted at 150°C until the epoxy equivalent reached 555. The resulting reaction product was then diluted with methyl isobutyl ketone until the solid content reached 80%. Subsequently, 1522 parts (in terms of solid content) of the compound (Z) of Production Example 2 was added, and the mixture was reacted at 120°C for 3 hours. Further, methyl isobutyl ketone was added thereinto to produce a solution of a polyfunctional modified epoxy resin (C1) having a solid content of 75%.

The resulting modified epoxy resin (C1) had an amine value of 0 mg KOH/g, an average polyfunctionalization degree (X1) of 0.15, and an average polyfunctionalization concentration (Y1) of 0.1.

<Example 3-2>

To a reaction vessel equipped with a stirrer, a thermometer, a nitrogen inlet tube, and a reflux condenser, 2082 parts of a bisphenol A epoxy resin (epoxy compound, molecular weight: 375), 292 parts of bisphenol A, 3.6 parts of dimethylbenzylamine (catalyst), and 263.7 parts of methyl isobutyl ketone (solvent) were added, and the mixture was reacted at 150°C until the epoxy equivalent reached 397. The resulting reaction product was then diluted with methyl isobutyl ketone until the solid content reached 80%. Subsequently, 1923 parts (in terms of solid content) of the compound (Z) was added, and the mixture was reacted at 120°C for 3 hours. Further, methyl isobutyl ketone was added thereinto to produce a solution of a polyfunctional modified epoxy resin (C2) having a solid content of 75%.

The resulting modified epoxy resin (C2) had an amine value of 0 mg KOH/g, an average polyfunctionalization degree (X1) of 1.50, and an average polyfunctionalization concentration (Y1) of 1.6.

<Example 3-3>

To a reaction vessel equipped with a stirrer, a thermometer, a nitrogen inlet tube, and a reflux condenser, 1915 parts of a bisphenol A epoxy resin (epoxy compound, molecular weight: 375), 275 parts of a polyfunctionalizing agent 9, 228 parts of bisphenol A, 1.0 parts of TBAB (tetrabutylammonium bromide; catalyst), and 268.6 parts of methyl isobutyl ketone (solvent) were added, and the mixture was reacted at 150°C until the epoxy equivalent reached 434. The resulting reaction product was then diluted with methyl isobutyl ketone until the solid content reached 80%. Subsequently, 1793 parts of the compound (Z) in terms of solid content was added, and the mixture was reacted at 120°C for 3 hours. Further, methyl isobutyl ketone was added thereinto to produce a solution of a polyfunctional modified epoxy resin (C) having a solid content of 75%.

The resulting modified epoxy resin (C3) had an amine value of 0 mg KOH/g, an average polyfunctionalization degree (X1) of 0.8, and an average polyfunctionalization concentration (Y1) of 0.41.

<Example 3-4>

To a reaction vessel equipped with a stirrer, a thermometer, a nitrogen inlet tube, and a reflux condenser, 1928 parts of a bisphenol A epoxy resin (epoxy compound, molecular weight: 375), 533 parts of a polyfunctionalizing agent 9, 1.0 parts of TBAB (tetrabutylammonium bromide; catalyst), and 273.4 parts of methyl isobutyl ketone (solvent) were added, and the mixture was reacted at 150°C until the epoxy equivalent reached 475. The resulting reaction product was then diluted with methyl isobutyl ketone until the solid content reached 80%. Subsequently, 1683 parts (in terms of solid content) of the compound (Z) was added, and the mixture was reacted at 120°C for 3 hours. Further, methyl isobutyl ketone was added thereinto to produce a solution of a polyfunctional modified epoxy resin (C4) having a solid content of 75%.

The resulting modified epoxy resin (C4) had an amine value of 0 mg KOH/g, an average polyfunctionalization degree (X1) of 3.02, and an average polyfunctionalization concentration (Y1) of 0.8.

<Example 3-5>

To a reaction vessel equipped with a stirrer, a thermometer, a nitrogen inlet tube, and a reflux condenser, 1054 parts of bisphenol A, 378 parts of a bisphenol A epoxy resin (epoxy compound, molecular weight: 375), 421 parts of a polyfunctionalizing agent 4, 1.0 parts of TBAB (tetrabutylammonium bromide; catalyst), and methyl isobutyl ketone (solvent) in an amount of 10% of the total mass of the bisphenol A epoxy resin, bisphenol A, and the polyfunctionalizing agent were added, and the mixture was reacted at 160°C until the epoxy equivalent reached 727. The resulting reaction product was then diluted to a solid content of 80% with methyl isobutyl ketone. Subsequently, 544 parts (in terms of solid content) of the compound (Z) was added, and the mixture was reacted at 120°C for 4 hours. Further, methyl isobutyl ketone was added thereinto to produce a solution of a polyfunctional modified epoxy resin (C5) having a solid content of 75%.

The resulting modified epoxy resin (C5) had an amine value of 0 mg KOH/g, an average polyfunctionalization

degree (X1) of 0.1, and an average polyfunctionalization concentration (Y1) of 0.05.

<Examples 3-6 to 3-12>

Solutions of polyfunctional modified epoxy resins (C6) to (C12) were produced in the same manner as in Example 3-5 except that the formulations presented in Table 5 below were used.

[Table 5]

| Examples | | Examples | | | | | | | |
|---|---|---|---|---|---|---|---|---|---|
| | | 3-5 | 3-6 | 3-7 | 3-8 | 3-9 | 3-10 | 3-11 | 3-12 |
| Name of Modified Epoxy Resin | | C5 | C6 | C7 | C8 | C9 | C10 | C11 | C12 |
| Bisphenol A Epoxy Resin | | 378 | 378 | 57 | 171 | 85 | 68 | 3319 | 858 |
| Bisphenol A | | 1054 | 1054 | 750 | 1500 | 2063 | 2738 | 188 | 375 |
| Polyfunctionalizing Agent 4 | | 21 | 21 | 105 | | | | | |
| Polyfunctionalizing Agent 3 | Bifunctional | | | | 252 | 462 | 672 | | |
| | Trifunctional or Higher Functional | | | | 1008 | 1848 | 2688 | | |
| Polyfunctionalizing Agent 8 | Bifunctional | | | | | | | 955 | 239 |
| | Trifunctional or Higher Functional | | | | | | | 3820 | 955 |
| (Epoxy Equivalent up to the Above Step) | | 727 | 727 | 456 | 1466 | 2229 | 3083 | 4141 | 1214 |
| Compound (Z) | | 544 | | 544 | 544 | 544 | 544 | 544 | 544 |
| Dimethylolpropionic acid | | | 268 | | | | | | |
| X1/Y1 | Polyfunctionalization Degree (X1) | 0.1 | 0.1 | 0.5 | 1.2 | 2.2 | 3.2 | 12 | 3 |
| | Polyfunctionalization Concentration (Y1) | 0.05 | 0.06 | 0.34 | 0.35 | 0.44 | 0.48 | 1.36 | 1.01 |

<Comparative Example 3-1>

To a reaction vessel equipped with a stirrer, a thermometer, a nitrogen inlet tube, and a reflux condenser, 1140 parts of a bisphenol A epoxy resin (epoxy compound, molecular weight: 375), 456 parts of bisphenol A, 1.1 parts of TBAB (tetrabutylammonium bromide; catalyst), and 200 parts of methyl isobutyl ketone (solvent) were added, and the mixture was reacted at 160°C until the epoxy equivalent reached approximately 800. The resulting reaction product was then diluted with methyl isobutyl ketone until the solid content reached 80%.

Then, 255 parts of dimethylolpropionic acid was added, and the mixture was reacted at 120°C for 4 hours. Further, methyl isobutyl ketone was added thereinto to produce a solution of a non-polyfunctional linear modified epoxy resin (C13) having a solid content of 75%. The resulting modified epoxy resin (C13) had a number-average molecular weight of approximately 1900, an amine value of 0 mg KOH/g, an average polyfunctionalization degree (X1) of 0, and an average polyfunctionalization concentration (Y1) of 0.

[Cationic Electrodeposition Coating Material W]

<Example 4-1>

60 parts (solid content) of the amine-added epoxy resin (C0) obtained in Production Example 1, 40 parts (solid content) of the modified epoxy resin (C1) obtained in Example 3-1, and 45 parts (solid content) of the blocked polyisocyanate compound (BNCO (B1)) in [Cationic Electrodeposition Coating Material X] above were mixed, and 13 parts of 10% acetic acid was further added to the mixture and evenly stirred. After that, deionized water was added dropwise with vigorous stirring over approximately 15 minutes, to produce an emulsion (E1) having a solid content of 34%.

Next, 294 parts of the emulsion (E1) (having a solid content of 100 parts), 52.4 parts of the pigment-dispersed paste (P1) in [Cationic Electrodeposition Coating Material X] above, and deionized water were added to produce a cationic electrodeposition coating material (W1) having a solid content of 20%. The average polyfunctionalization concentration (Y3) of the cationic electrodeposition coating material (W1) is presented in Table 7 below.

Electrodeposition coating was performed using the resulting cationic electrodeposition coating material (W1), and heat curing was carried out to produce an electrodeposition coating film. The surface finish, corrosion resistance (salt spray), corrosion resistance (salt immersion), and oil crawling resistance of the resulting electrodeposition coating film were evaluated. The results are collectively given in Table 6.

In the present invention, coating films with even one rating of "C" in the four evaluations are deemed as unacceptable. Note that, the values of resin contents in the tables are all in terms of solid content.

<Examples 4-2 to 4-12 and Comparative Example 4-1>

Cationic electrodeposition coating materials (W2) to (W13) having a solid content of 20% were produced in the same manner as in Example 4-1 except that the formulations presented in Table 6 below were used. Various evaluation results are presented in Table 7.

[Table 6]

| Examples and Comparative Example | | Examples | | | | | | | | | | | | Comparative Example |
|---|---|---|---|---|---|---|---|---|---|---|---|---|---|---|
| | | 4-1 | 4-2 | 4-3 | 4-4 | 4-5 | 4-6 | 4-7 | 4-8 | 4-9 | 4-10 | 4-11 | 4-12 | 4-1 |
| Name of Cationic Electrodeposition Coating Material | | W1 | W2 | W3 | W4 | W5 | W6 | W7 | W8 | W9 | W10 | W11 | W12 | W13 |
| | Modified Epoxy Resin | C1 | C2 | C3 | C4 | C5 | C6 | C7 | C8 | C9 | C10 | C11 | C12 | C13 |
| | | 40 | 40 | 40 | 50 | 40 | 40 | 40 | 40 | 40 | 40 | 40 | 40 | 40 |
| | Amine-Added Epoxy Resin | C0 60 | C0 60 | C0 60 | C0 50 | C0 60 | C0 60 | C0 60 | C0 60 | C0 60 | C0 60 | C0 60 | C0 60 | C0 60 |
| Average Polyfunctionalization Degree (X1) | | 0.15 | 1.5 | 0.8 | 3.0 | 0.1 | 0.1 | 0.5 | 1.2 | 2.2 | 3.2 | 12.0 | 3.0 | 0 |
| Average Polyfunctionalization Concentration (Y1) | | 0.10 | 1.60 | 0.41 | 0.80 | 0.05 | 0.06 | 0.34 | 0.35 | 0.44 | 0.48 | 1.36 | 1.01 | 0 |
| Average Polyfunctionalization Concentration (Y3) | | 0.04 | 0.64 | 0.16 | 0.40 | 0.02 | 0.02 | 0.14 | 0.14 | 0.18 | 0.19 | 0.54 | 0.40 | 0 |
| Evaluation result | Surface Finish | S | S | S | S | S | S | S | S | S | S | B2 | S | S |
| | Corrosion Resistance (Salt Spray) | S | S | S | S | S | A | S | S | S | S | S | S | S |
| | Corrosion Resistance (Salt Immersion) | S | S | S | S | A | A | S | S | S | S | S | S | B |
| | Oil Crawling Resistance | B | B | A | S | B | B | A | A | A | A | S | S | C |

In addition, the amine-modified epoxy resins (A9) to (A12) were each used to replace, in terms of solid content, the amine-added epoxy resin (C0) in Examples 4-4 and 4-12, and the resulting cationic electrodeposition coating materials were also evaluated in the same manner. All of the evaluation results were good.

Although the present invention has been described in detail with reference to the embodiments and examples above, the present invention is not limited to the above-described embodiments and examples, and various modifications can be made based on the technical idea of the present invention.

## Claims

1. A modified epoxy resin produced by reaction of at least the following (i) and (ii) and having an average polyfunctionalization degree (X1) per molecule of the modified epoxy resin of 0.10 or greater,

   (i) a compound ($\alpha$) having one or more epoxy groups,
   (ii) a compound ($\beta$) having a functional group that is reactive with an epoxy group and that has a total functionality of the functional group of 3 or greater, and/or a compound ($\gamma$) having a functional group that is reactive with an epoxy group and that has a total functionality of the functional group of 1 or 2, and

   the average polyfunctionalization degree (X1) per molecule of the modified epoxy resin being represented by Equation (1),

   Average Polyfunctionalization Degree (X1) = Number of Terminals Per Molecule of Modified Epoxy Resin - 2     Equation (1):

2. The modified epoxy resin according to claim 1, wherein the compound ($\beta$) is a polyfunctionalizing agent comprising a compound (A) having "a" primary amino groups, "b" secondary amino groups, "c" alcoholic hydroxyl groups, "d" phenolic hydroxyl groups, "e" carboxyl groups, "f" mercapto groups, "g" sulfonate groups, "h" carboxylic anhydride groups, "i" epoxy groups, and "u" isocyanate groups, where a, b, c, d, e, f, g, h and u are each independently an integer of 0 or greater, i is an integer of 0 or 3 or greater, $2a + b + c + d + e + f + g + 2h + i + u \geq 3$, and, when $d \geq 3$, $2a + b + c + e + f + g + 2h + i + u \geq 1$.

3. A modified epoxy resin produced by reaction of at least the following (i) and (ii),

   (i) a compound ($\alpha$) having one or more epoxy groups,
   (ii) a compound ($\beta$) having a functional group that is reactive with an epoxy group and that has a total functionality of the functional group of 3 or greater,

   wherein the compound ($\beta$) is a polyfunctionalizing agent comprising a compound (A) having "a" primary amino groups, "b" secondary amino groups, "c" alcoholic hydroxyl groups, "e" carboxyl groups, "f" mercapto groups, "g" sulfonate groups, "h" carboxylic anhydride groups, "i" epoxy groups, and "u" isocyanate groups, where a, b, c, e, f, g, h and u are each independently an integer of 0 or greater, i is an integer of 0 or 3 or greater, $2a + b + c + e + f + g + 2h + i + u \geq 3$, and, when $b = 1$, $a \neq 1$, $c \neq 2$, or $e + f + g + 2h + i + u \geq 1$.

4. The modified epoxy resin according to claim 1, wherein

   the (ii) above comprises a compound ($\beta$) having a functional group that is reactive with an epoxy group and that has a total functionality of the functional group of 3 or greater, and
   the compound ($\beta$) is a polyfunctionalizing agent comprising a compound (A) having "a" primary amino groups, "b" secondary amino groups, "c" alcoholic hydroxyl groups, "e" carboxyl groups, "f" mercapto groups, "g" sulfonate groups, "h" carboxylic anhydride groups, "i" epoxy groups, and "u" isocyanate groups, where a, b, c, e, f, g, h and u are each independently an integer of 0 or greater, i is an integer of 0 or 3 or greater, $2a + b + c + e + f + g + 2h + i + u \geq 3$, and, when $b = 1$, $a \neq 1$, $c \neq 2$, or $e + f + g + 2h + i + u \geq 1$.

5. The modified epoxy resin according to claim 3 or 4, wherein the polyfunctionalizing agent comprises one or more types selected from the group consisting of an amine compound having two or more amino groups, a carboxylic acid compound having three or more carboxyl groups or an anhydride thereof, an alcohol compound having three

or more alcoholic hydroxyl groups, and an epoxy compound having three or more epoxy groups.

**6.** The modified epoxy resin according to claim 3 or 4, wherein

the polyfunctionalizing agent further comprises a compound (B) having "j" primary amino groups, "k" secondary amino groups, "m" alcoholic hydroxyl groups, "n" phenolic hydroxyl groups, "p" carboxyl groups, "q" mercapto groups, "r" sulfonate groups, "s" carboxylic anhydride groups, and "t" isocyanate groups, where j, k, m, n, p, q, r, s, and t are each independently an integer of 0 or greater and $2j + k + m + n + p + q + r + 2s + t \leq 2$, and

a content ratio of the compound (A) to the compound (B) is within a range of from 1/99 to 99/1.

**7.** The modified epoxy resin according to claim 3, wherein the modified epoxy resin has an average polyfunctionalization degree (X1) per molecule of the modified epoxy resin of 0.10 or greater, the average polyfunctionalization degree (X1) per molecule of the modified epoxy resin being represented by Equation (1) below,

Average Polyfunctionalization Degree (X1) = Number of Terminals Per Molecule of Modified Epoxy Resin - 2 Equation (1):

**8.** The modified epoxy resin according to claim 1 or 3, wherein an average polyfunctionalization concentration (Y1) is 0.10 or greater, the polyfunctionalization concentration (Y1) being represented by Equation (2) below,

Average Polyfunctionalization Concentration (Y1) = Average Polyfunctionalization Degree (XI) of Modified Epoxy Resin ÷ Weight-Average Molecular Weight Mw of Modified Epoxy Resin × 1000. Equation (2):

**9.** The modified epoxy resin according to claim 1, wherein the compound ($\gamma$) comprises a compound ($\gamma$1) having no amino group.

**10.** The modified epoxy resin according to claim 1, wherein the compound ($\gamma$) is a compound having no amino group.

**11.** The modified epoxy resin according to claim 1, wherein

at least some of the terminals of the modified epoxy resin are organic groups represented by the following structural formula (1) or the following structural formula (2):

[Chem. 1]

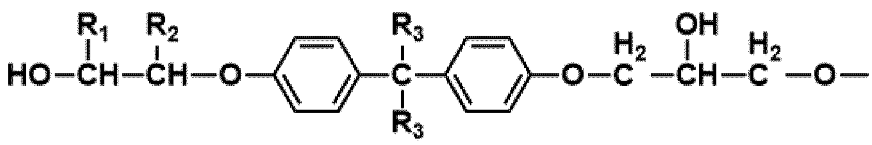

· · · Formula (1)

where, $R_1$ and $R_2$ each independently represent a hydrogen atom, a hydroxymethyl group, an alkyl group having from 1 to 12 carbons, or an alkyloxymethyl group having from 1 to 13 carbons; $R_3$ represents a hydrogen atom or a methyl group, and a plurality of $R_3$s may be the same or different;

[Chem. 2]

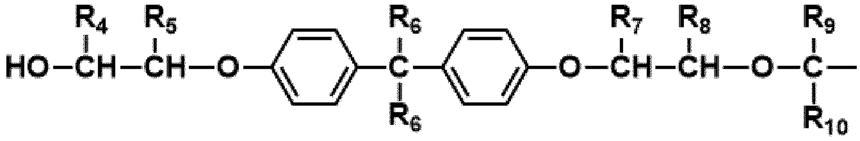

· · · Formula (2)

where, $R_4$ and $R_5$ each independently represent a hydrogen atom, a hydroxymethyl group, an alkyl group having from 1 to 12 carbons, or an alkyloxymethyl group having from 1 to 13 carbons; $R_6$ represents a hydrogen atom or a methyl group, and a plurality of $R_6$s may be the same or different; $R_7$, $R_8$, $R_9$ and $R_{10}$ each independently represent a hydrogen atom or an alkyl group having from 1 to 12 carbons.

**12.** An aqueous resin dispersion containing the modified epoxy resin according to claim 1 or 3 dispersed in an aqueous medium.

**13.** An amine-modified epoxy resin produced by reaction of the modified epoxy resin according to claim 1 or 3 with an amine compound.

**14.** A cationic electrodeposition coating material comprising the modified epoxy resin according to claim 1 or a modified product of the modified epoxy resin.

**15.** A cationic electrodeposition coating material comprising an epoxy resin and a curing agent, the epoxy resin comprising the modified epoxy resin according to claim 1 and an amine-added epoxy resin.

**16.** A cationic electrodeposition coating material comprising the amine-modified epoxy resin according to claim 13.

**17.** A cationic electrodeposition coating material comprising an epoxy resin and a curing agent, the epoxy resin comprising the amine-modified epoxy resin according to claim 13 and the modified epoxy resin according to claim 1.

**18.** The cationic electrodeposition coating material according to claim 16, wherein
the amine-modified epoxy resin contained in the cationic electrodeposition coating material has an average polyfunctionalization degree (X2) of 0.10 or greater, the average polyfunctionalization degree (X2) being represented by Equation (3) below,

Average Polyfunctionalization Degree (X2) =N umber of Terminals Per Molecule of Modified Epoxy Resin (I) - 2    Equation (3):

**19.** The cationic electrodeposition coating material according to claim 16, wherein
the amine-modified epoxy resin contained in the cationic electrodeposition coating material has an average polyfunctionalization concentration (Y2) of 0.10 or greater, the average polyfunctionalization concentration (Y2) being represented by Equation (4) below,

Average Polyfunctionalization Concentration (Y2) of Amine-Modified Epoxy Resin Contained in Cationic Electrodeposition Coating Material = Average Polyfunctionalization Degree (X2) of Amine-Modified Epoxy Resin $\div$ Weight-Average Molecular Weight Mw of Amine-Modified Epoxy Resin (I) $\times$ 100 $\times$ (Amount of Amine-Modified Epoxy Resin (I) $\div$ Amount of All Amine-Modified Epoxy Resins).    Equation (4):

**20.** The cationic electrodeposition coating material according to claim 14 or 15, wherein
the epoxy resin contained in the cationic electrodeposition coating material has an average polyfunctionalization concentration (Y3) of 0.1 or greater, the average polyfunctionalization concentration (Y3) being represented by Equation (5) below,

Average Polyfunctionalization Concentration (Y3) of Epoxy Resin Contained in Cationic Electrodeposition Coating Material = Average Polyfunctionalization Degree (X1) of Modified Epoxy Resin $\div$ Weight-Average Molecular Weight Mw of Modified Epoxy Resin $\times$ 1000 $\times$ (Amount of Modified Epoxy Resin $\div$ Amount of All Epoxy Resins).    Equation (5):

**INTERNATIONAL SEARCH REPORT**

International application No. **PCT/JP2022/035613**

**A. CLASSIFICATION OF SUBJECT MATTER**

***C08G 59/40***(2006.01)i; ***C08G 59/06***(2006.01)i; ***C08G 59/14***(2006.01)i; ***C08G 59/62***(2006.01)i; ***C09D 5/44***(2006.01)i; ***C09D 163/00***(2006.01)i
FI: C08G59/40; C09D5/44 A; C09D163/00; C08G59/62; C08G59/06; C08G59/14

According to International Patent Classification (IPC) or to both national classification and IPC

**B. FIELDS SEARCHED**

Minimum documentation searched (classification system followed by classification symbols)

C08G59/40; C08G59/06; C08G59/14; C08G59/62; C09D5/44; C09D163/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/166657 A1 (KANSAI PAINT CO., LTD.) 20 August 2020 (2020-08-20) paragraph [0053], production example 34 (paragraphs [0117]-[0128], table 3) | 1-10, 12-20 |
| Y | paragraph [0008] | 11-13, 15-20 |
| X | JP 60-6721 A (DAINIPPON INK & CHEMICALS INC.) 14 January 1985 (1985-01-14) p. 1, right column to p. 2, upper left column, p. 4, upper left column to upper right column, p. 5, lower left column, examples (p. 6, upper right column to p. 10) | 1, 8-10, 14 |
| Y | p. 3, lower left column | 11-13, 15-20 |
| Y | WO 2016/080483 A1 (KANSAI PAINT CO., LTD.) 26 May 2016 (2016-05-26) claims, paragraphs [0015], [0037] | 11 |
| A | JP 2019-137724 A (NIPPON PAINT INDUSTRIAL COATINGS CO., LTD.) 22 August 2019 (2019-08-22) | 1-20 |
| P, X | WO 2021/193635 A1 (KANSAI PAINT CO., LTD.) 30 September 2021 (2021-09-30) | 1-10, 12-20 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 November 2022** | **29 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/035613**

| Patent document cited in search report | Publication date (day/month/year) | Patent family member(s) | Publication date (day/month/year) |
|---|---|---|---|
| WO 2020/166657 A1 | 20 August 2020 | (Family: none) | |
| JP 60-6721 A | 14 January 1985 | (Family: none) | |
| WO 2016/080483 A1 | 26 May 2016 | US 2018/0327613 A1<br>claims, paragraphs [0014], [0034]<br>EP 3222687 A1<br>CN 107109105 A | |
| JP 2019-137724 A | 22 August 2019 | (Family: none) | |
| WO 2021/193635 A1 | 30 September 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 104628995 A
- JP 2016135848 A
- JP 2001279168 A
- JP 8337750 A